# EUROPEAN PATENT APPLICATION

(11) **EP 4 270 306 A1**
(43) Date of publication of application: **01.11.2023**
(21) Application number: 21910920.4
(22) Date of filing: 22.12.2021
(51) Int. Cl.: G06T 7/00, G07D 7/12, G07D 7/202

(54) **COLLATION DEVICE, COLLATION PROGRAM, RECORDING MEDIUM, AND COLLATION METHOD**

(30) Priority: 22.12.2020 JP 2020212626
(71) Applicant: Fujifilm Business Innovation Corp., Tokyo 107-0052 (JP)
(72) Inventor: YAMAMOTO, Shigeru, Yokohama-shi, Kanagawa 220-8668 (JP); HIRATA, Kazuhiro, Yokohama-shi, Kanagawa 220-8668 (JP); KITAGAWA, Nobuhiro, Yokohama-shi, Kanagawa 220-8668 (JP)
(74) Representative: Kurig, Thomas
(86) International application number: PCT/JP2021/047733
(87) International publication number: WO 2022/138780

(57) **Abstract**

A comparison apparatus includes a processor. The processor obtains a plurality of captured images obtained by capturing images of an inspection image to be compared while changing a radiation direction of light radiated onto the inspection image and notifies of a result of comparison between the inspection image and a comparison image in accordance with degrees of a plurality of registered images obtained by capturing in advance images of the comparison image, whose pattern changes depending on a radiation direction of light, while changing the radiation direction of light radiated onto the comparison image and inspection images included in the plurality of captured images after adjusting positional relationships between a camera, a light source, and the comparison image such that the positional relationships become the same as positional relationships between a camera that captures the images of the inspection image in a case where the images of the inspection image are captured, a light source that radiates light onto the inspection image, and the inspection image.

## Description

### Technical Field

The present invention relates to a comparison apparatus, a comparison program, a storage medium, and a comparison method.

### Background Art

PTL 1 discloses a device authentication system including a device to be authenticated having a random pattern and a device authentication apparatus that obtains the random pattern of the device to be authenticated and that authenticates authenticity of the device to be authenticated. In the device authentication system, the device to be authenticated includes glitter that is embedded in a base material having high light transmittance and that reflects light. The device authentication apparatus includes a light source that radiates light onto the device to be authenticated, random pattern reading means for reading the random pattern on the device to be authenticated from an optical image reflected by the device to be authenticated, first data obtaining means for obtaining first ID data unique to the device to be authenticated from the random pattern read by the random pattern reading means, second data recording means for recording second ID data for comparison, which is used to determine authenticity of the first ID data, second data obtaining means for obtaining the second ID data recorded by the second data recording means, and relationship calculation means for calculating a relationship between the first ID data and the second ID data and authenticating authenticity of the device to be authenticated.

PTL 2 discloses an object identification apparatus including imaging means for capturing an image of a target position on a surface of an object, radiation means for radiating light onto the target position, control means for sequentially switching a direction of the light radiated from the radiation means relative to the target position to a plurality of different directions and obtaining a captured image for each of the plurality of directions by causing the imaging means to capture an image of the target location when the light is radiated in the direction, and identification means for identifying each of objects by comparing feature information indicated by the captured image in each of the plurality of directions with feature information registered for the object.

### Citation List

### Patent Literature

PTL 1: Japanese Unexamined Patent Application Publication No. 2004-171109
PTL 1: Japanese Unexamined Patent Application Publication No. 2020-154946

### Summary of Invention

### Technical Problem

Comparison apparatuses are known that identify an individual object using a pattern of a comparison image formed on a surface of the object as identification information. Such a comparison apparatus compares a captured image, which is obtained by capturing an image of an inspection image to be compared, with a registered image, which is obtained in advance by capturing an image of a comparison image, in accordance with a predetermined comparison algorithm to compare the inspection image with the registered image.

Even when an inspection image is a genuine comparison image, however, it might be determined that the inspection image is not similar to the comparison image, if conditions under which the images of the inspection image and the comparison image have been captured are different from each other.

For example, positions, in an imaging apparatus, of a camera and a light that radiates light onto an image are different between models of imaging apparatuses. An angle at which a person captures an image is also different between persons. Even when an image of the same area of the same image is captured, therefore, a positional relationship between the image, a camera, and a light is different. As a result, how the image looks changes, and it might be determined that an inspection image is not similar to a comparison image.

Aspects of non-limiting embodiments of the present disclosure relate to provision of a comparison apparatus, a comparison program, a storage medium, and a comparison method capable of more accurately determining whether an inspection image is a duplicate of a comparison image than when an image of the inspection image captured from one direction is compared with a registered image.

### Solution to Problem

[1] According to an aspect of the present disclosure, there is provided a comparison apparatus including a processor. The processor obtains a plurality of captured images obtained by capturing images of an inspection image to be compared while changing a radiation direction of light radiated onto the inspection image and notifies of a result of comparison between the inspection image and a comparison image in accordance with degrees of a plurality of registered images obtained by capturing in advance images of the comparison image, whose pattern changes depending on a radiation direction of light, while changing the radiation direction of light radiated onto the comparison image and inspection images included in the plurality of captured images after adjusting positional relationships between a camera, a light source, and the comparison image such that the positional relationships become the same as positional relationships between a camera that captures the images of the inspection image in a case where the images of the inspection image are captured, a light source that radiates light onto the inspection image, and the inspection image.
[2] In the comparison apparatus according to [1], the processor may notify of the result of comparison on a basis of the registered images including four images captured while shifting the radiation direction of light radiated onto the comparison image by 90 degrees at a time along a periphery of the comparison image.
[3] In the comparison apparatus according to [2], the processor may notify of the result of comparison on a basis of the registered images including, in addition to the four images, four additional images captured while shifting, from radiation directions of light radiated onto the comparison image in a case where the four images have been captured, the radiation direction of light by an angle smaller than 90 degrees at a time along the periphery of the comparison image.
[4] In the comparison apparatus according to [3], the processor may notify of the result of comparison while determining, as the four additional images, images captured while shifting, from the radiation directions of light radiated onto the comparison image in a case where the four images have been captured, the radiation direction of light by 45 degrees at a time along the periphery of the comparison image.
[5] In the comparison apparatus according to any of [1] to [4], the processor may notify of the result of comparison on a basis of the registered images captured under light radiated from one point light source.
[6] In the comparison apparatus according to [5], the processor may notify of the result of comparison on a basis of the registered images for which an angle between an optical axis of the point light source and an optical axis of a camera of a first imaging apparatus that captures the registered images is adjusted in accordance with an angle between an optical axis of a camera of a second imaging apparatus that captures the images of the inspection image and an optical axis of a built-in point light source of the second imaging apparatus.
[7] In the comparison apparatus according to any of [1] to [6], the comparison image may be a three-dimensional image formed on a recording medium in three dimensions.
[8] In the comparison apparatus according to [7], the three-dimensional image may be an image formed by making powder adhere to the recording medium.
[9] In the comparison apparatus according to [8], the image composed of the powder may be an image composed of black or silver powder on a surface of the recording medium.
[10] In the comparison apparatus according to any of [1] to [6], the comparison image may be an image on a surface of an object formed by attaching a material containing silver powder to the object.
[11] According to another aspect of the present disclosure, there is provided a comparison program causing a computer to perform a process including obtaining a plurality of captured images obtained by capturing images of an inspection image to be compared while changing a radiation direction of light radiated onto the inspection image and notifying of a result of comparison between the inspection image and a comparison image in accordance with degrees of a plurality of registered images obtained by capturing in advance images of the comparison image, whose pattern changes depending on a radiation direction of light, while changing the radiation direction of light radiated onto the comparison image and inspection images included in the plurality of captured images after adjusting positional relationships between a camera, a light source, and the comparison image such that the positional relationships become the same as positional relationships between a camera that captures the images of the inspection image in a case where the images of the inspection image are captured, a light source that radiates light onto the inspection image, and the inspection image.
[12] According to another aspect of the present disclosure, there is provided a storage medium storing a comparison program causing a computer to perform a process including obtaining a plurality of captured images obtained by capturing images of an inspection image to be compared while changing a radiation direction of light radiated onto the inspection image and notifying of a result of comparison between the inspection image and a comparison image in accordance with degrees of a plurality of registered images obtained by capturing in advance images of the comparison image, whose pattern changes depending on a radiation direction of light, while changing the radiation direction of light radiated onto the comparison image and inspection images included in the plurality of captured images after adjusting positional relationships between a camera, a light source, and the comparison image such that the positional relationships become the same as positional relationships between a camera that captures the images of the inspection image in a case where the images of the inspection image are captured, a light source that radiates light onto the inspection image, and the inspection image.
[13] According to another aspect of the present disclosure, there is provided a comparison method including obtaining a plurality of captured images obtained by capturing images of an inspection image to be compared while changing a radiation direction of light radiated onto the inspection image and notifying of a result of comparison between the inspection image and a comparison image in accordance with degrees of a plurality of registered images obtained by capturing in advance images of the comparison image, whose pattern changes depending on a radiation direction of light, while changing the radiation direction of light radiated onto the comparison image and inspection images included in the plurality of captured images after adjusting positional relationships between a camera, a light source, and the comparison image such that the positional relationships become the same as positional relationships between a camera that captures the images of the inspection image in a case where the images of the inspection image are captured, a light source that radiates light onto the inspection image, and the inspection image.

### Advantageous Effects of Invention

According to [1], [11], [12], and [13], whether an inspection image is a duplicate of a comparison image can be accurately determined compared to when an image of the inspection image captured from one direction is compared with a registered image.

According to [2], a result of comparison can be notified of insofar as there are at least four registered images for one comparison image.

According to [3], an effect of comparing an inspection image more accurately than when an inspection image is compared using four registered images is produced.

According to [4], an effect of improving, from a case where an inspection image is compared using registered images captured while shifting a radiation direction of light radiated onto the comparison image by 90 degrees at a time along a periphery of a genuine image, accuracy of comparing an inspection image whose images have been captured by an imaging apparatus in which a camera and a light source are arranged such that an angle between a contour of the imaging apparatus and a straight line connecting the camera and the light source built in the imaging apparatus to each other becomes 45 degrees is produced.

According to [5], accuracy of comparing an inspection image whose images have been captured by an imaging apparatus that radiates light with one point light source can be improved from a case where an inspection image is compared using registered images captured under light radiated from a plurality of light sources.

According to [6], an inspection image can be compared more accurately than when an inspection image is compared using registered images captured without adjusting an angle between an optical axis of a point light source and an optical axis of a first imaging apparatus in a case where the registered images are captured to an angle between an optical axis of a second imaging apparatus that captures images of the inspection image and an optical axis of a built-in point light source.

According to [7], an effect of being able to obtain, from one comparison image, a plurality of registered images whose patterns are different from one another is produced.

According to [8], an effect of being able to perform comparison using a genuine image generated by an image forming apparatus that forms an image on a recording medium with powder is produced.

According to [9], accuracy of comparing an inspection image and a comparison image can be improved from a case where a comparison image composed of powder whose color is not black or silver is used.

According to [10], accuracy of comparing an inspection image and a comparison image can be improved from a case where an image composed of a material obtained by mixing powder whose color is not silver is used.

### Brief Description of Drawings

[Fig. 1] Fig. 1 is an enlarged view of an example of a comparison image.
[Fig. 2] Fig. 2 is a diagram illustrating an example of a genuine comparison image and a duplicate image obtained by duplicating the comparison image.
[Fig. 3] Fig. 3 is a diagram illustrating an example of a graph illustrating degrees of similarity between the comparison image and the duplicate image.
[Fig. 4A] Fig. 4A is a diagram illustrating an example of a comparison image irradiated from the left.
[Fig. 4B] Fig. 4B is a graph illustrating degrees of similarity relating to the comparison image illustrated in Fig. 4A.
[Fig. 5A] Fig. 5A is a diagram illustrating an example of a comparison image irradiated from the bottom.
[Fig. 5B] Fig. 5B is a graph illustrating degrees of similarity relating to the comparison image illustrated in Fig. 5A.
[Fig. 6] Fig. 6 is an example of a graph illustrating degrees of similarity between the comparison image irradiated from the left and the comparison image irradiated from the bottom.
[Fig. 7] Fig. 7 is a configuration diagram illustrating an example of a comparison system.
[Fig. 8A] Fig. 8A is a diagram illustrating an example of a smartphone.
[Fig. 8B] Fig. 8B is a diagram illustrating an example of a mode in which the smartphone illustrated in Fig. 8A captures an image of an inspection image.
[Fig. 9] Fig. 9 is a diagram illustrating an example of a mode in which a dedicated apparatus captures an image of a comparison image.
[Fig. 10A] Fig. 10A is a diagram illustrating a first smartphone of perpendicular arrangement.
[Fig. 10B] Fig. 10B is a diagram illustrating an example of an imaging mode of the first smartphone.
[Fig. 10C] Fig. 10C is a diagram illustrating another example of the imaging mode of the first smartphone.
[Fig. 11A] Fig. 11A is a diagram illustrating a second smartphone of perpendicular arrangement.
[Fig. 11B] Fig. 11B is a diagram illustrating an example of an imaging mode of the second smartphone.
[Fig. 11C] Fig. 11C is a diagram illustrating another example of the imaging mode of the second smartphone.
[Fig. 12A] Fig. 12A is a diagram illustrating a third smartphone of perpendicular arrangement.
[Fig. 12B] Fig. 12B is a diagram illustrating an example of an imaging mode of the third smartphone.
[Fig. 12C] Fig. 12C is a diagram illustrating another example of the imaging mode of the third smartphone.
[Fig. 13A] Fig. 13A is a diagram illustrating a fourth smartphone of perpendicular arrangement.
[Fig. 13B] Fig. 13B is a diagram illustrating an example of an imaging mode of the fourth smartphone.
[Fig. 13C] Fig. 13C is a diagram illustrating another example of the imaging mode of the fourth smartphone.
[Fig. 14A] Fig. 14A is a diagram illustrating a fifth smartphone of inclined arrangement.
[Fig. 14B] Fig. 14B is a diagram illustrating an example of an imaging mode of the fifth smartphone.
[Fig. 14C] Fig. 14C is a diagram illustrating another example of the imaging mode of the fifth smartphone.
[Fig. 15A] Fig. 15A is a diagram illustrating a sixth smartphone of inclined arrangement.
[Fig. 15B] Fig. 15B is a diagram illustrating an example of an imaging mode of the sixth smartphone.
[Fig. 15C] Fig. 15C is a diagram illustrating another example of the imaging mode of the sixth smartphone.
[Fig. 16A] Fig. 16A is a diagram illustrating a seventh smartphone of inclined arrangement.
[Fig. 16B] Fig. 16B is a diagram illustrating an example of an imaging mode of the seventh smartphone.
[Fig. 16C] Fig. 16C is a diagram illustrating another example of the imaging mode of the seventh smartphone.
[Fig. 17A] Fig. 17A is a diagram illustrating an eighth smartphone of inclined arrangement.
[Fig. 17B] Fig. 17B is a diagram illustrating an example of an imaging mode of the eighth smartphone.
[Fig. 17C] Fig. 17C is a diagram illustrating another example of the imaging mode of the eighth smartphone.
[Fig. 18A] Fig. 18A is a diagram illustrating another example of the imaging mode of the second smartphone.
[Fig. 18B] Fig. 18B is a diagram illustrating another example of the imaging mode of the second smartphone.
[Fig. 19A] Fig. 19A is a diagram illustrating another example of the imaging mode of the fourth smartphone.
[Fig. 19B] Fig. 19B is a diagram illustrating another example of the imaging mode of the fourth smartphone.
[Fig. 20A] Fig. 20A is a diagram illustrating another example of the imaging mode of the sixth smartphone.
[Fig. 20B] Fig. 20B is a diagram illustrating another example of the imaging mode of the sixth smartphone.
[Fig. 21A] Fig. 21A is a diagram illustrating another example of the imaging mode of the seventh smartphone.
[Fig. 21B] Fig. 21B is a diagram illustrating another example of the imaging mode of the seventh smartphone.
[Fig. 22A] Fig. 22A is a diagram illustrating another example of the imaging mode of the eighth smartphone.
[Fig. 22B] Fig. 22B is a diagram illustrating another example of the imaging mode of the eighth smartphone.
[Fig. 23A] Fig. 23A is a diagram illustrating an example of an imaging mode in which the fifth smartphone is arranged horizontally or vertically.
[Fig. 23B] Fig. 23B is a diagram illustrating an example of an imaging mode in which the fifth smartphone is arranged horizontally or vertically.
[Fig. 23C] Fig. 23C is a diagram illustrating an example of an imaging mode in which the fifth smartphone is arranged horizontally or vertically.
[Fig. 24A] Fig. 24A is a diagram illustrating an example of an imaging mode in which the sixth smartphone is arranged horizontally or vertically.
[Fig. 24B] Fig. 24B is a diagram illustrating an example of an imaging mode in which the sixth smartphone is arranged horizontally or vertically.
[Fig. 24C] Fig. 24C is a diagram illustrating an example of an imaging mode in which the sixth smartphone is arranged horizontally or vertically.
[Fig. 25A] Fig. 25A is a diagram illustrating an example of an imaging mode in which the seventh smartphone is arranged horizontally or vertically.
[Fig. 25B] Fig. 25B is a diagram illustrating an example of an imaging mode in which the seventh smartphone is arranged horizontally or vertically.
[Fig. 25C] Fig. 25C is a diagram illustrating an example of an imaging mode in which the seventh smartphone is arranged horizontally or vertically.
[Fig. 26A] Fig. 26A is a diagram illustrating an example of an imaging mode in which the eighth smartphone is arranged horizontally or vertically.
[Fig. 26B] Fig. 26B is a diagram illustrating an example of an imaging mode in which the eighth smartphone is arranged horizontally or vertically.
[Fig. 26C] Fig. 26C is a diagram illustrating an example of an imaging mode in which the eighth smartphone is arranged horizontally or vertically.
[Fig. 27] Fig. 27 is a diagram illustrating an example of key components of an electrical system of a computer.
[Fig. 28] Fig. 28 is a flowchart illustrating an example of a comparison process performed by a CPU of a comparison apparatus.

### Description of Embodiments

An exemplary embodiment of the present invention will be described in detail hereinafter with reference to the drawings. The same components and the same steps are given the same reference numerals throughout the drawings, and redundant description thereof is omitted.

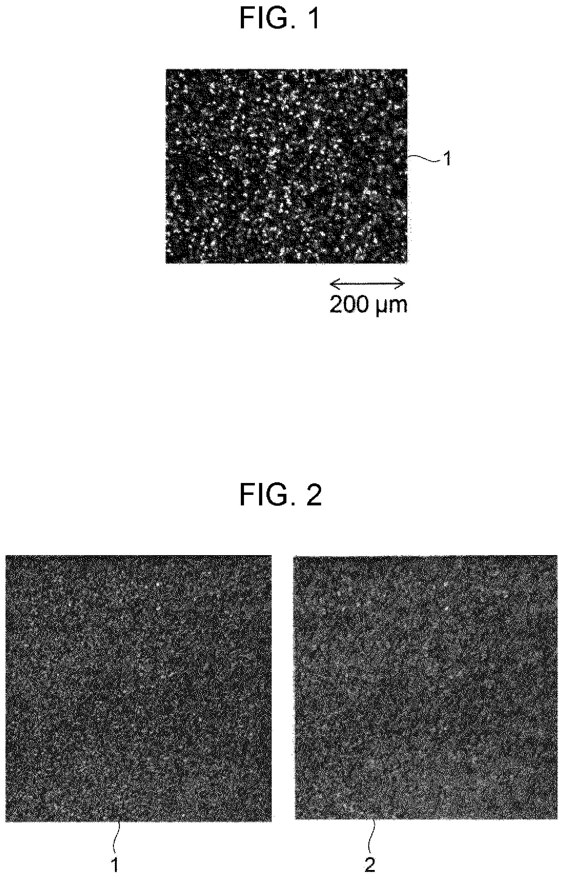

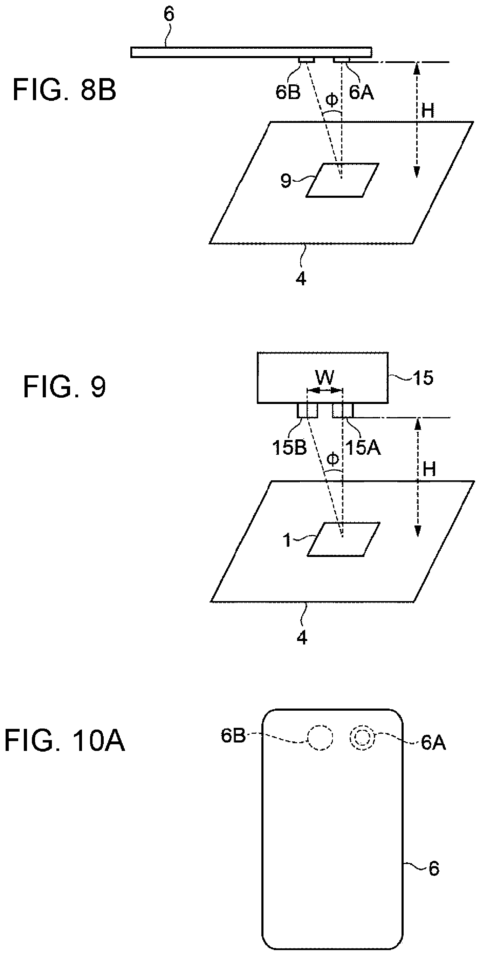

Fig. 1 is an enlarged view of an example of a comparison image 1 used in the present exemplary embodiment. The comparison image 1 is an image formed, on a recording medium 4 (refer to Fig. 8B), by an image forming apparatus that forms images using powder such as toner. In the present exemplary embodiment, the comparison image 1 will be described as being formed on the recording medium 4, but may be formed on an object other than the recording medium 4, such as a food container, instead. That is, the comparison image 1 may be formed on any object on which the comparison image 1 can be formed, and types of object are not limited.

When the comparison image 1 formed on the recording medium 4 using black powder is enlarged, for example, it can be seen, as illustrated in Fig. 1, that the comparison image 1 is a three-dimensional image formed in three dimensions as particles of powder agglomerate and adhere to the recording medium 4. The three-dimensional image refers to, for example, an image in which unevenness larger than or equal to an average particle size of the powder is observed as shading in a stacking direction of the powder on the recording medium 4. Because there are various average particle sizes of powder, powder of any average particle size may be used, but the average particle size of the powder for forming the comparison image 1 in the present exemplary embodiment is about 6 µm.

Alternatively, an image formed by mixing metal particles with powder may be used as the comparison image 1. An image formed by powder mixed with aluminum particles, which are an example of metal particles, exhibits a silvery color, and an image formed by powder mixed with brass particles, which are another example of the metal particles, exhibits a golden color.

The powder used to form the comparison image 1 contains metal particles such as aluminum. When light is radiated onto the comparison image 1, the light is reflected by the randomly stacked metal particles of powder, and the comparison image 1 shows a pattern of shading in accordance with intensity of the reflected light. When an object and the comparison image 1 are associated with each other by attaching the comparison image 1 formed on the recording medium 4 to the object or directly forming the comparison image 1 on the object using the image forming apparatus, the object associated with the comparison image 1 can be identified by detecting the pattern of the comparison image 1.

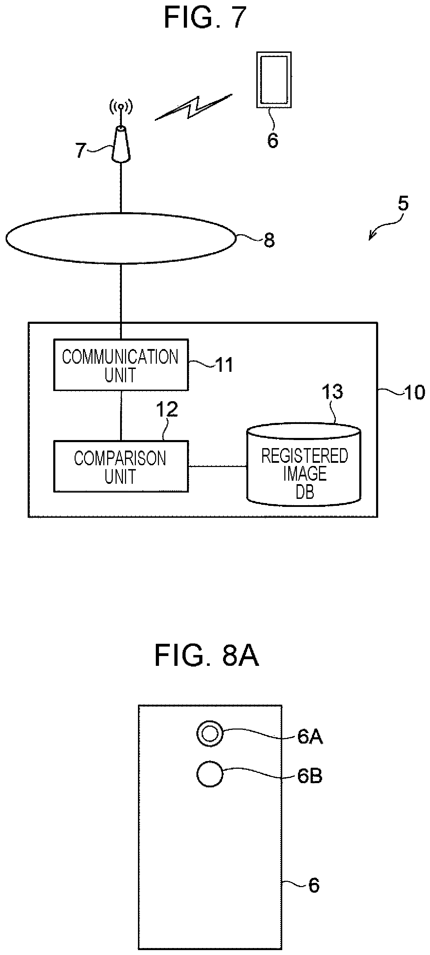

Performance of information apparatuses having a camera function, which are typified by the smartphone 6 (refer to Fig. 7), for example, and image forming apparatuses has improved. A duplicate image 2 of a genuine comparison image 1 can be obtained by capturing an image of the comparison image 1 using the smartphone 6 and forming the captured image of the comparison image 1 on a recording medium using the image forming apparatus. More specifically, when a smartphone 6 that captures an image with a resolution of 1,000 dpi and an inkjet printer that forms an image with a resolution of 4,800 dpi are used, a duplicate image 2 that exhibits characteristics of the pattern of the comparison image 1 is formed.

Fig. 2 is a diagram illustrating an example of a genuine comparison image 1 and a duplicate image 2 of the comparison image 1 created using the smartphone 6 and an inkjet printer as described above. The comparison image 1 and the duplicate image 2 illustrated in Fig. 2 are images captured with a resolution of 1,012 dpi.

It can be seen that the duplicate image 2 illustrated in Fig. 2 is less clear than the genuine comparison image 1, but characteristics of a pattern of shading of the comparison image 1 are reproduced on the duplicate image 2.

Although the rectangular comparison image 1 is used for description in the present exemplary embodiment, a shape of the comparison image 1 is not limited. Another shape such as a circle, an ellipse, or a polygon may be used, instead.

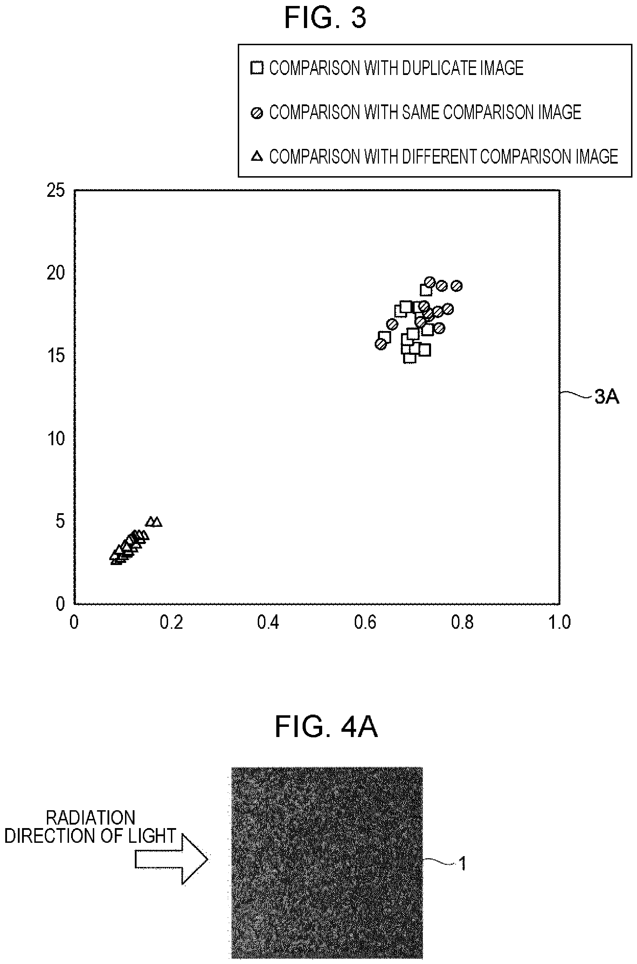

Fig. 3 is a graph 3A illustrating an example of a calculation result obtained by calculating degrees of similarity between the comparison image 1 and the duplicate image 2 illustrated in Fig. 2 using a known comparison algorithm such as ZNCC (zero-mean normalized cross-correlation). Here, for example, the resolution of the comparison image 1 and the duplicate image 2 illustrated in Fig. 2 is converted into 600 dpi, and then the degrees of similarity are calculated. In the comparison algorithm used to calculate the degrees of similarity, accuracy of calculating the degrees of similarity can be improved by combining together a plurality of methods, and here, the degrees of similarity between the comparison image 1 and the duplicate image 2 are calculated, for example, by two methods.

In Fig. 3, a vertical axis represents a degree of similarity calculated by a first method, and a horizontal axis represents a degree of similarity calculated by a second method. On both the vertical and horizontal axes, larger values indicate more similar images. That is, the images get more similar to each other toward an upper-right part of the graph 3A along a diagonal line of the graph 3A, and the images get less similar to each other toward a lower-left part of the graph 3A.

Rectangle markers in Fig. 3 indicate results of calculation of degrees of similarity between the comparison image 1 and the duplicate image 2 in corresponding parts. Since the rectangle markers are concentrated in the upper-right part of the graph 3A, it can be seen that the comparison image 1 and the duplicate image 2 are similar to each other.

Circle markers in Fig. 3 indicate results of calculation of degrees of similarity, in corresponding parts, between images obtained, for example, by capturing an image of the same comparison image 1 twice. The circle markers obviously indicate that comparison images 1 are similar to each other since the identical comparison images 1 are compared with each other.

Triangle markers in Fig. 3 indicate results of calculation of degrees of similarity between different comparison images 1 in corresponding parts. The triangle markers, which indicate the degrees of similarity between the comparison images 1, are obviously concentrated in the lower-left part of the graph 3A, that is, indicate that the comparison images 1 are not similar to each other, since the different comparison images 1 are compared with each other.

As illustrated in Fig. 3, the degrees of similarity between the comparison image 1 and the duplicate image 2 are almost the same as the degrees of similarity between the identical comparison images 1, that is, a duplicate of the comparison image 1 can be created with such a level of precision that makes it difficult to distinguish a duplicate from the comparison image 1.

The pattern of shading observed on the comparison image 1 composed of powder, however, reflects shadows of the surface unevenness, and the pattern of the comparison image 1 changes depending on a radiation direction of light even though the comparison image 1 remains the same. Since the powder tends to agglomerate in units of several tens of micrometers, for example, the pattern of the comparison image 1 also tends to change in units of width of the agglomeration.

In the comparison image 1 composed of powder mixed with metal particles, minute surfaces of the metal particles that cause regular reflection are randomly disposed, and the pattern of the comparison image 1 changes depending on the radiation direction of light even though the comparison image 1 remains the same. When particles of several to 10 µm are used, brightness tends to change in units of several tens of micrometers.

Fig. 4A is a diagram illustrating an example of the comparison image 1 in a case where light is radiated onto a comparison area from the left from upward (left and diagonally upward) in a direction perpendicular to a left side of the comparison image 1. Such a mode of radiation of light will be referred to as "radiate light from the left" hereinafter.

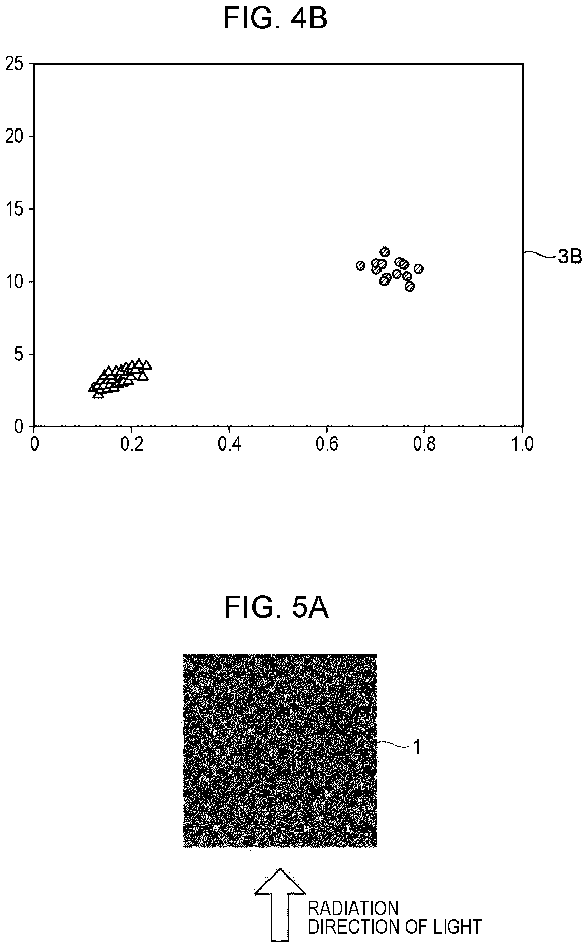

Fig. 4B is an example of a graph 3B illustrating results (indicated by circle markers) of calculation of degrees of similarity, in corresponding parts, between comparison images 1 obtained by capturing an image of the comparison image 1 illustrated in Fig. 4A twice and results (indicated by triangle markers) of calculation of degrees of similarity, in corresponding parts, between the comparison image 1 illustrated in Fig. 4A and another comparison image 1 obtained by capturing an image of a comparison image 1 different from that illustrated in Fig. 4A with light radiated from the left of the comparison image 1. Meanings of a vertical axis and a horizontal axis of the graph 3B are the same as those of the vertical axis and the horizontal axis of the graph 3A illustrated in Fig. 3.

It can be seen from the graph 3B of Fig. 4B that, when the radiation direction of light remains the same, the captured identical comparison images 1 are determined to be similar to each other and that, even when the radiation direction of light remains the same, the different comparison images 1 are determined to be not similar to each other.

Fig. 5A is a diagram illustrating an example of the comparison image 1, which is the same as that illustrated in Fig. 4A, in a case where light is radiated onto a comparison area from the bottom from diagonally upward along a direction perpendicular to a base of the comparison image 1. Such a mode of radiation of light will be referred to as "radiate light from the bottom".

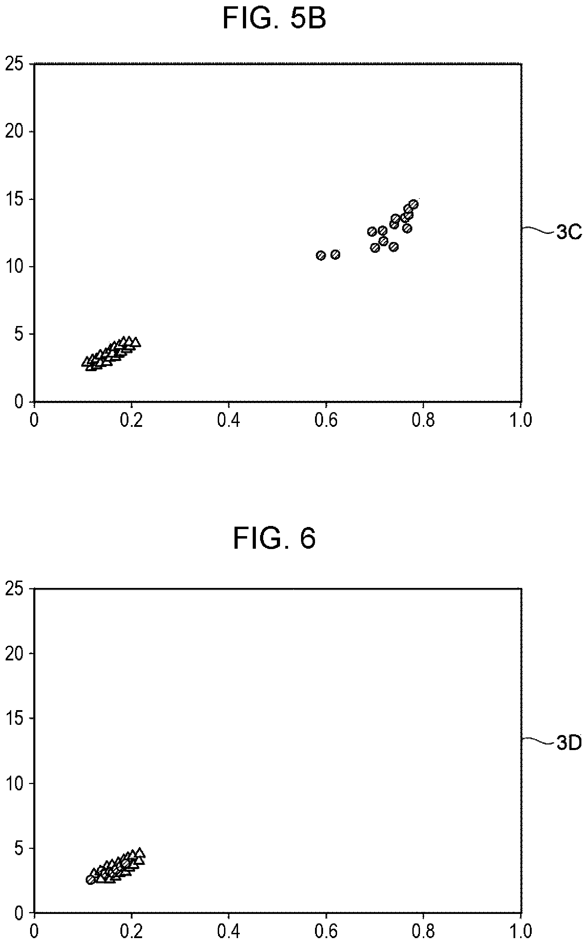

Fig. 5B is an example of a graph 3C illustrating results (indicated by circle markers) of calculation of degrees of similarity, in corresponding parts, between comparison images 1 obtained by capturing an image of the comparison image 1 illustrated in Fig. 5A twice and results (indicated by triangle markers) of calculation of degrees of similarity, in corresponding parts, between the comparison image 1 illustrated in Fig. 5A and another comparison image 1 obtained by capturing an image of a comparison image 1 different from that illustrated in Fig. 5A with light radiated from the bottom of the comparison image 1. Meanings of a vertical axis and a horizontal axis of the graph 3C are the same as those of the vertical axis and the horizontal axis of the graph 3A illustrated in Fig. 3.

It can be seen from the graph 3C of Fig. 5B that, when the radiation direction of light remains the same, identical comparison images 1 included in the captured images are determined to be similar to each other and that, even when the radiation direction of light remains the same, the different comparison images 1 are determined to be not similar to each other.

Fig. 6 is an example of a graph 3D illustrating results (indicated by circle markers) of calculation of degrees of similarity, in corresponding parts, between the comparison image 1 illustrated in Fig. 4A and the comparison image 1 illustrated in Fig. 5A, that is, between identical comparison images 1 onto which light is radiated from different directions, and results (indicated by triangle markers) of calculation of degrees of similarity, in corresponding parts, between different comparison images 1 onto which light is radiated from the same direction.

It can be seen from Fig. 6 that even identical comparison images 1 are determined to be different from each other just like different comparison images 1 when the radiation direction of light.

In the present exemplary embodiment, a comparison system 5 will be described that determines whether an image to be compared (referred to as an "inspection image 9"), whose images are captured by the imaging apparatus, is similar to a comparison image 1. The comparison system 5 utilizes a characteristic of the comparison image 1 that a degree of similarity changes even with identical comparison images 1 depending on the radiation direction of light.

The imaging apparatus that captures images of the inspection image 9 may be an imaging apparatus of any type insofar as the imaging apparatus includes a camera 6A and one light source 6B for radiating light (refer to Fig. 8A), but in the exemplary embodiment, an example where the smartphone 6 captures images of the inspection image 9 will be described. The smartphone 6 is an example of a second imaging apparatus.

Fig. 7 is a configuration diagram illustrating an example of the comparison system 5 according to the present exemplary embodiment. The comparison system 5 includes the smartphone 6 that captures an image of an inspection image 9 and a comparison apparatus 10 that compares an inspection image 9 included in the captured image with the comparison image 1. The smartphone 6 is connected to a communication network 8 through a wireless base station 7, for example, and to the comparison apparatus 10, which is also connected to the communication network 8. The communication network 8 may be a wired network or a wireless network, and may be a dedicated network or a public network.

Although Fig. 7 illustrates only one smartphone 6 for convenience of description, a plurality of smartphones 6 might be connected to the comparison apparatus 10 in practice.

The comparison apparatus 10 includes functional units, namely a communication unit 11 and a comparison unit 12, and a registered image DB (database) 13.

The communication unit 11 communicates data with the smartphone 6 over the communication network 8. More specifically, the communication unit 11 obtains, from the smartphone 6, a plurality of captured images obtained by capturing images of an inspection image 9 while changing the radiation direction of light, and gives each of the captured images to the comparison unit 12.

Upon receiving each of the captured images from the communication unit 11, the comparison unit 12 calculates a degree of similarity between the inspection image 9 included in the captured image and a comparison image 1 included in a registered image registered in advance to the registered image DB 13 using a known comparison algorithm. The comparison unit 12 then notifies the communication unit 11 of a result of comparison between the inspection image 9 included in the captured image and the comparison image 1 included in the registered image.

Here, registered images are images obtained by capturing, while changing the radiation direction of light, each comparison image 1 whose pattern changes depending on the radiation direction of light and are images that serve as originals of the comparison image 1. As can be seen from a fact that images of each comparison image 1 are captured while changing the radiation direction of light for the comparison image 1, there are a plurality of registered images for one comparison image 1. A plurality of registered images obtained from one comparison image 1 will be referred to as a "registered image group" hereinafter.

That is, a registered image group exists for each comparison image 1, and registered images included in each registered image group are registered in the registered image DB 13 in units of registered image groups. The registered image DB 13 manages information in which comparison images 1 and registered image groups are associated with each other so that correspondence between each registered image group and a comparison image 1 from which the registered image group has been obtained can be identified.

When inspection images 9 included in a plurality of captured images are similar to a plurality of registered images included in a specific registered image group, respectively, the comparison unit 12 determines that the inspection images 9 included in the captured images are images obtained by capturing images of the comparison image 1 corresponding to the specific registered image group while changing the radiation direction of light.

Upon receiving a comparison result from the comparison unit 12, the communication unit 11 transmits the received comparison result to, for example, the smartphone 6 that has transmitted the captured image. A comparison result indicating whether captured inspection images 9 included in the captured images match comparison images 1 included in the registered images registered in the registered image DB 13 is thus transmitted to the smartphone 6.

When an inspection image 9 whose images have been captured by a user is a duplicate image 2 obtained by duplicating a comparison image 1 using an inkjet printer, the duplicate image 2 is not a three-dimensional image but a flat image. Even if images of a duplicate image 2 are captured while changing the radiation direction of light, therefore, a pattern of the duplicate image 2 included in the captured images does not change, and only the captured images showing the duplicate image 2 having the same pattern are obtained.

In this case, a registered image having the same pattern as a duplicate image 2 included in one of the captured images exists in the registered image DB 13. Since patterns of duplicate images 2 included in the other captured images are the same as that of the duplicate image 2 included in the foregoing captured image, however, a registered image having the same pattern as that of one of the duplicate images 2 included in the other captured images does not exist in the registered image group other than the foregoing registered image. The duplicate images 2 included in the plurality of captured images, therefore, are not similar to a plurality of registered images, respectively, included in a specific registered image group. The inspection image 9 whose images have been captured by the user, therefore, is a duplicate of the comparison image 1, and the comparison apparatus 10 can determine authenticity of the comparison image 1.

The registered image DB 13 need not necessarily be included in the comparison apparatus 10, and may be included in an external apparatus, which is not illustrated, connected to the communication network 8, instead. In this case, the comparison apparatus 10 refers to the registered image DB 13 included in the external apparatus, which is not illustrated, over the communication network 8 as necessary.

Next, an imaging mode for registered images used for comparison of the comparison image 1 will be described. For this purpose, first, an imaging mode for capturing images of an inspection image 9 to be compared using the smartphone 6 will be described.

Fig. 8A is a diagram illustrating the smartphone 6, and Fig. 8B is a diagram illustrating an example of an imaging mode in which the smartphone 6 captures images of the inspection image 9. As illustrated in Fig. 8A, the smartphone 6 includes the camera 6A and the light source 6B therein. A point light source that radiates light from one point is used as the light source 6B. The light source 6B is an example of a built-in point light source. The light source 6B may be a light source in which one or a plurality of LEDs (light-emitting diode) are concentrated.

As illustrated in Fig. 8B, the user captures an image of the inspection image 9 to be compared while directing a surface (referred to as an "imaging surface of the smartphone 6") of the smartphone 6 on which the camera 6A is provided toward the inspection image 9 so that the camera 6A of the smartphone 6 faces the inspection image 9.

Imaging environment attributes that affect imaging conditions for the inspection image 9, such as size of the inspection image 9 included in a captured image, illuminance distribution on the inspection image 9 onto which the light source 6B radiates light, and a radiation angle of light by the light source 6B, change depending on an angle between an optical axis of the camera 6A and an optical axis of the light source 6B (referred to as a "radiation angle ϕ") and a distance between the imaging surface of the smartphone 6 and the inspection image 9 (referred to as an "imaging distance H").

In order to compare the inspection image 9 included in a captured image obtained in this manner with the comparison image 1 with a level of precision as high as possible, for example, the image of the comparison image 1 may be captured, as illustrated in Fig. 9, using a dedicated apparatus 15 with a radiation angle ϕ and an imaging distance H close to those in a case where the user captures the image of the inspection image 9 using the smartphone 6.

With the dedicated apparatus 15, therefore, a distance (referred to as a "device distance W") between a center of a lens of a camera 15A and a center of a radiation surface of a light source 15B in the dedicated apparatus 15 can be changed. A person who captures a registered image brings the imaging distance H of the dedicated apparatus 15 closer to that in a case where the smartphone 6 captures an image of an inspection image 9 and then adjusts the device distance W to bring the radiation angle ϕ of the dedicated apparatus 15 closer to the radiation angle ϕ in a case where the smartphone 6 captures the image of the inspection image 9.

Although it depends on a model of the smartphone 6, the smartphone 6 is likely to capture an image having the highest level of resolution specified for the smartphone 6 when the imaging distance H is 100 mm. When the imaging distance H is longer than 100 mm, an inspection image 9 included in a captured image becomes too small to compare the inspection image 9 with a registered image. When the imaging distance H is shorter than 100 mm, on the other hand, the camera 6A tends to be out of focus on the inspection image 9, and resolution of the inspection image 9 tends to decrease. The imaging distance H of the dedicated apparatus 15, therefore, may be set within an adjustment range of, for example, 100 mm ± α mm (α is a real number). α is a predetermined length indicating a fluctuation range within which the smartphone 6 can obtain an image having a level of resolution that can be regarded as the highest level of resolution.

Even when models are different, on the other hand, the device distance W of the smartphone 6 tends to fall within a range of about 10 mm to 15 mm due to a relationship between size of the camera 15A and the light source 15B and size of the smartphone 6. The device distance W of the dedicated apparatus 15, therefore, is accordingly set to about 10 mm to 15 mm.

One point light source is often used as the light source 6B of the smartphone 6. In order to bring illuminance distribution of the light source 15B of the dedicated apparatus 15 close to that of the light source 6B of the smartphone 6, therefore, the light source 15B of the dedicated apparatus 15 may also be one point light source.

Next, a radiation direction of light radiated from the light source 15B when the dedicated apparatus 15 captures a plurality of registered images will be examined.

As described above, a pattern of a comparison image 1 changes when the radiation direction of light changes, and even the same comparison image 1 can be determined as different comparison images.

In order to compare an inspection image 9 included in a captured image obtained by the smartphone 6 with a comparison image 1 included in a registered image, therefore, it is necessary to capture an image of the comparison image 1 using the dedicated apparatus 15 by radiating light from the light source 15B of the dedicated apparatus 15 in the same direction as a direction of light radiated when the smartphone 6 captures an image of the inspection image 9.

In particular, when a smartphone 6 in which the camera 6A and the light source 6B are arranged such that a straight line connecting centers of the camera 6A and the light source 6B to each other is perpendicular to one of contour lines of the smartphone 6 captures an image of an inspection image 9, a plurality of registered images obtained by capturing images of a comparison image 1 while radiating light from at least two different directions may be prepared in advance.

The arrangement of the camera 6A and the light source 6B where the straight line connecting the centers of the camera 6A and the light source 6B to each other is perpendicular to one of the contour lines of the smartphone 6 will be referred to as "perpendicular arrangement".

When a smartphone 6 in which the camera 6A and the light source 6B are in perpendicular arrangement is used, for example, a registered image obtained by capturing an image of a comparison image 1 irradiated from the left and a registered image obtained by capturing an image of the comparison image 1 irradiated from the bottom are prepared. As a result, inspection images 9 included in captured images and comparison images 1 included in the registered images can be compared with each other regardless of relative positions of the camera 6A and the light source 6B.

Radiation of light onto an image, such as a comparison image 1 or an inspection image 9, from the left to the right with the light source 6B disposed to the left of the camera 6A will be referred to as "left radiation". Radiation of light onto an image from the right to the left with the light source 6B disposed to the right of the camera 6A will be referred to as "right radiation". Radiation of light onto an image from a top to a bottom of the image with the light source 6B disposed at a top of the camera 6A will be referred to as "top radiation", and radiation of light onto an image from a bottom to a top of the image with the light source 6B disposed at a bottom of the camera 6A will be referred to "bottom radiation".

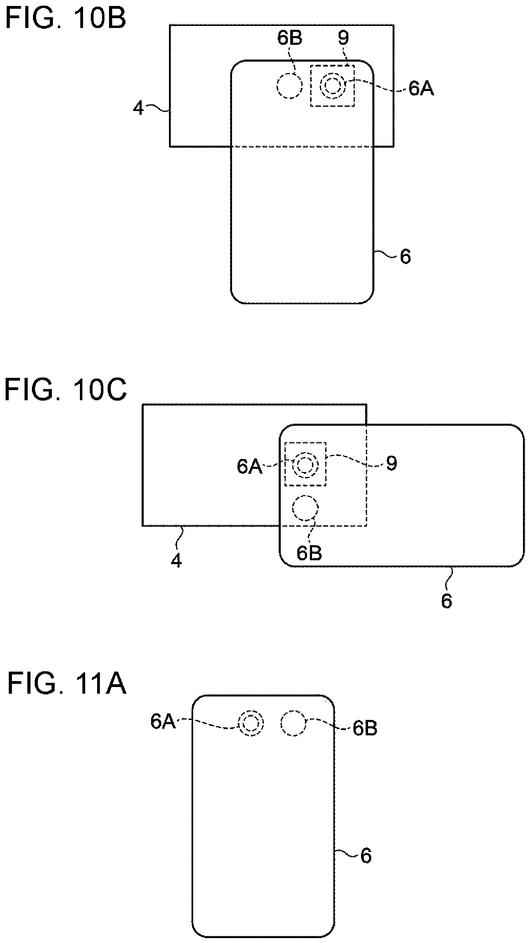

Fig. 10A is a diagram illustrating a first smartphone 6, in which the camera 6A and the light source 6B are in perpendicular arrangement, and Figs. 10B and 10C are diagrams illustrating examples of a radiation direction of light of the first smartphone 6.

Fig. 10A is a diagram illustrating the smartphone 6 viewed from a surface of the smartphone 6 opposite an imaging surface, that is, an operation surface on which a screen is provided. In the smartphone 6 illustrated in Fig. 10A, the camera 6A and the light source 6B are arranged along a short side of contour lines of the smartphone 6, and in an upper half of the smartphone 6, the camera 6A is disposed on the right and the light source 6B is disposed on the left when viewed from the operation surface of the smartphone 6. Since the camera 6A and the light source 6B are not visible when viewed from the operation surface of the smartphone 6, the camera 6A and the light source 6B are indicated by broken lines.

Fig. 10B is a diagram illustrating an example of arrangement of the smartphone 6 illustrated in Fig. 10A in a case where the smartphone 6 captures an image of an inspection image 9 irradiated from the left.

Fig. 10C is a diagram illustrating an example of arrangement of the smartphone 6 illustrated in Fig. 10A in a case where the smartphone 6 captures an image of the inspection image 9 irradiated from the bottom.

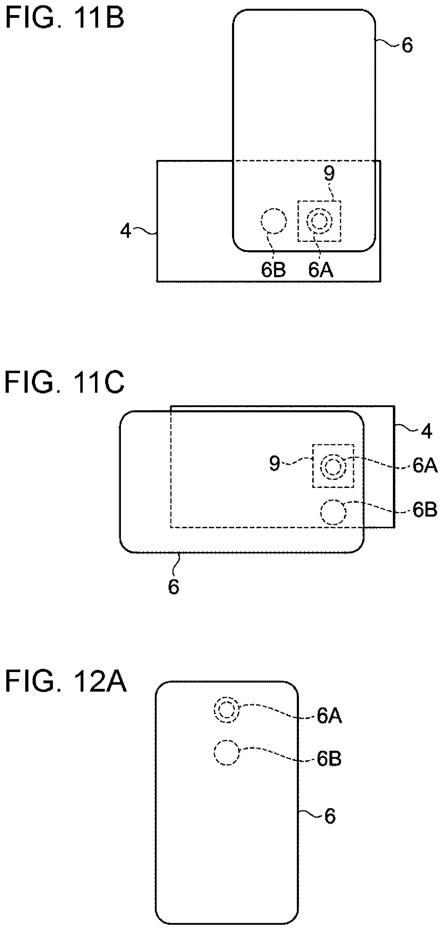

Fig. 11A is a diagram illustrating a second smartphone 6, in which the camera 6A and the light source 6B are in perpendicular arrangement, and Figs. 11B and 11C are diagrams illustrating examples of a radiation direction of light of the second smartphone 6.

In the smartphone 6 illustrated in Fig. 11A, the camera 6A and the light source 6B are arranged along a short side of contour lines of the smartphone 6, and in an upper half of the smartphone 6, the camera 6A is disposed on the left and the light source 6B is disposed on the right when viewed from an operation surface of the smartphone 6.

Fig. 11B is a diagram illustrating an example of arrangement of the smartphone 6 illustrated in Fig. 11A in a case where the smartphone 6 captures an image of an inspection image 9 irradiated from the left.

Fig. 11C is a diagram illustrating an example of arrangement of the smartphone 6 illustrated in Fig. 11A in a case where the smartphone 6 captures an image of the inspection image 9 irradiated from the bottom.

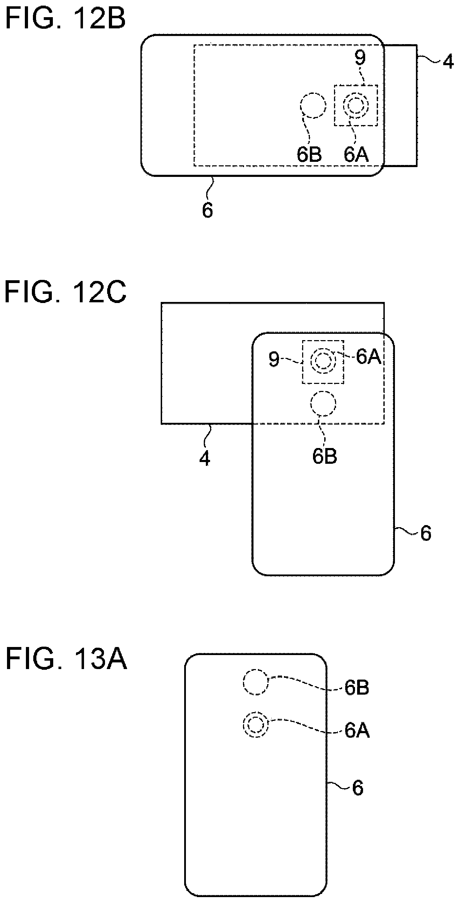

Fig. 12A is a diagram illustrating a third smartphone 6, in which the camera 6A and the light source 6B are in perpendicular arrangement, and Figs. 12B and 12C are diagrams illustrating examples of a radiation direction of light of the third smartphone 6.

In the smartphone 6 illustrated in Fig. 12A, the camera 6A and the light source 6B are arranged along a long side of contour lines of the smartphone 6, and in an upper half of the smartphone 6, the camera 6A is disposed above the light source 6B when viewed from an operation surface of the smartphone 6.

Fig. 12B is a diagram illustrating an example of arrangement of the smartphone 6 illustrated in Fig. 12A in a case where the smartphone 6 captures an image of an inspection image 9 irradiated from the left.

Fig. 12C is a diagram illustrating an example of arrangement of the smartphone 6 illustrated in Fig. 12A in a case where the smartphone 6 captures an image of the inspection image 9 irradiated from the bottom.

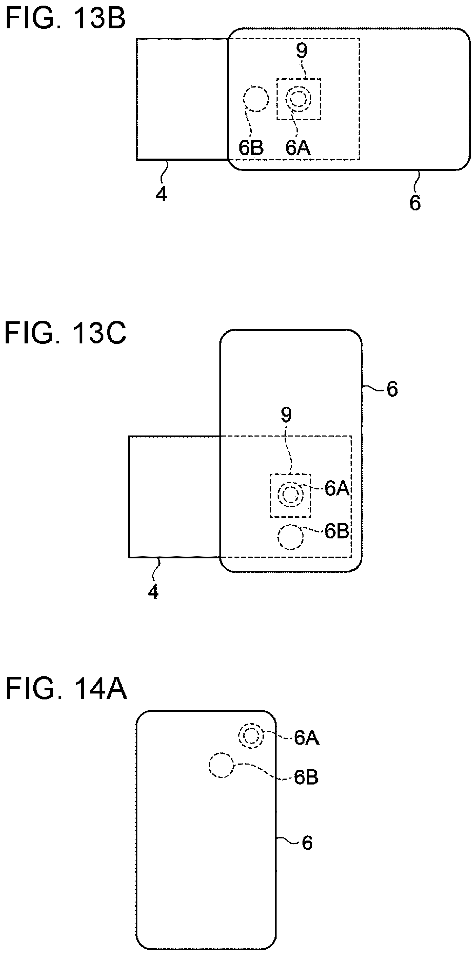

Fig. 13A is a diagram illustrating a fourth smartphone 6, in which the camera 6A and the light source 6B are in perpendicular arrangement, and Figs. 13B and 13C are diagrams illustrating examples of a radiation direction of light of the fourth smartphone 6.

In the smartphone 6 illustrated in Fig. 13A, the camera 6A and the light source 6B are arranged along a long side of contour lines of the smartphone 6, and in an upper half of the smartphone 6, the camera 6A is disposed below the light source 6B when viewed from an operation surface of the smartphone 6.

Fig. 13B is a diagram illustrating an example of arrangement of the smartphone 6 illustrated in Fig. 13A in a case where the smartphone 6 captures an image of an inspection image 9 irradiated from the left.

Fig. 13C is a diagram illustrating an example of arrangement of the smartphone 6 illustrated in Fig. 13A in a case where the smartphone 6 captures an image of the inspection image 9 irradiated from the bottom.

By arranging the smartphone 6 with respect to the inspection image 9 as illustrated in Figs. 10B to 13C, the smartphone 6 in which the camera 6A and the light source 6B are in perpendicular arrangement can obtain a captured image showing the inspection image 9 irradiated from the left and a captured image showing the inspection image 9 irradiated from the bottom.

The smartphone 6 may display a guide for assisting the user in capturing the inspection image 9 so that the imaging conditions in a case where the user captures an image of the inspection image 9 using the smartphone 6 become similar to those in a case where an image of the comparison image 1 was captured using the dedicated apparatus 15.

Here, the imaging conditions are conditions that define a positional relationship between the camera 6A and the light source 6B of the smartphone 6 and the inspection image 9. More specifically, the smartphone 6 may display, on a screen thereof, information for notifying the user that the radiation angle ϕ of the light source 6B and the imaging distance H of the camera 6A have become similar to the radiation angle ϕ of the light source 15B and the imaging distance H of the camera 15A at a time when an image of the comparison image 1 was captured using the dedicated apparatus 15.

The arrangement of the camera 6A and the light source 6B in the smartphone 6 is not limited to perpendicular arrangement. For example, there are smartphones 6 of "inclined arrangement", where the camera 6A and the light source 6B are arranged such that the straight line connecting the centers of the camera 6A and the light source 6B to each other and one of contour lines of the smartphone 6 intersects with each other at an angle other than 90 degrees.

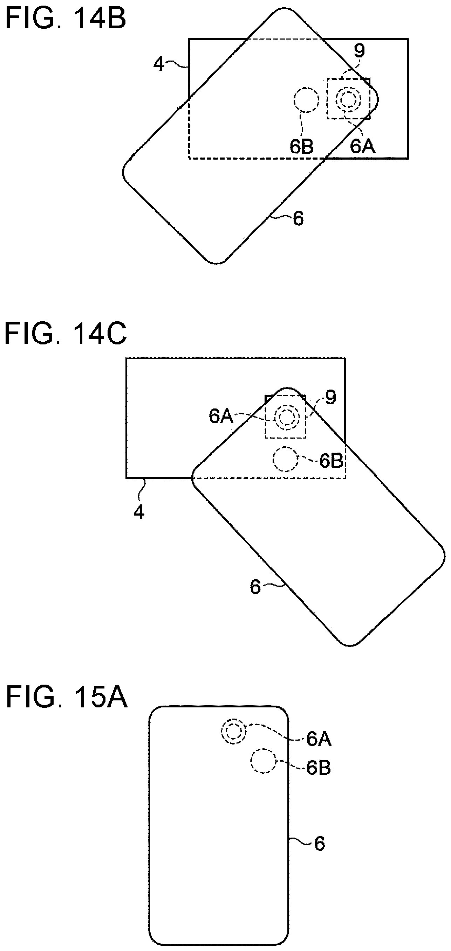

Fig. 14A is a diagram illustrating a fifth smartphone 6, in which the camera 6A and the light source 6B are in inclined arrangement, and Figs. 14B and 14C are diagrams illustrating examples of a radiation direction of light of the fifth smartphone 6.

In the smartphone 6 illustrated in Fig. 14A, the light source 6B is disposed below and to the left of the camera 6A disposed in an upper half of the smartphone 6.

Fig. 14B is a diagram illustrating an example of arrangement of the smartphone 6 illustrated in Fig. 14A in a case where the smartphone 6 captures an image of an inspection image 9 irradiated from the left.

Fig. 14C is a diagram illustrating an example of arrangement of the smartphone 6 illustrated in Fig. 14A in a case where the smartphone 6 captures an image of the inspection image 9 irradiated from the bottom.

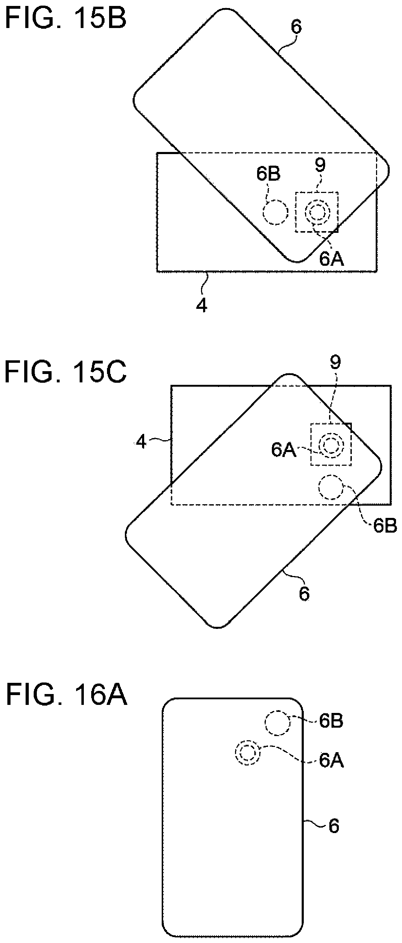

Fig. 15A is a diagram illustrating a sixth smartphone 6, in which the camera 6A and the light source 6B are in inclined arrangement, and Figs. 15B and 15C are diagrams illustrating examples of a radiation direction of light of the sixth smartphone 6.

In the smartphone 6 illustrated in Fig. 15A, the light source 6B is disposed below and to the right of the camera 6A disposed in an upper half of the smartphone 6.

Fig. 15B is a diagram illustrating an example of arrangement of the smartphone 6 illustrated in Fig. 15A in a case where the smartphone 6 captures an image of an inspection image 9 irradiated from the left.

Fig. 15C is a diagram illustrating an example of arrangement of the smartphone 6 illustrated in Fig. 15A in a case where the smartphone 6 captures an image of the inspection image 9 irradiated from the bottom.

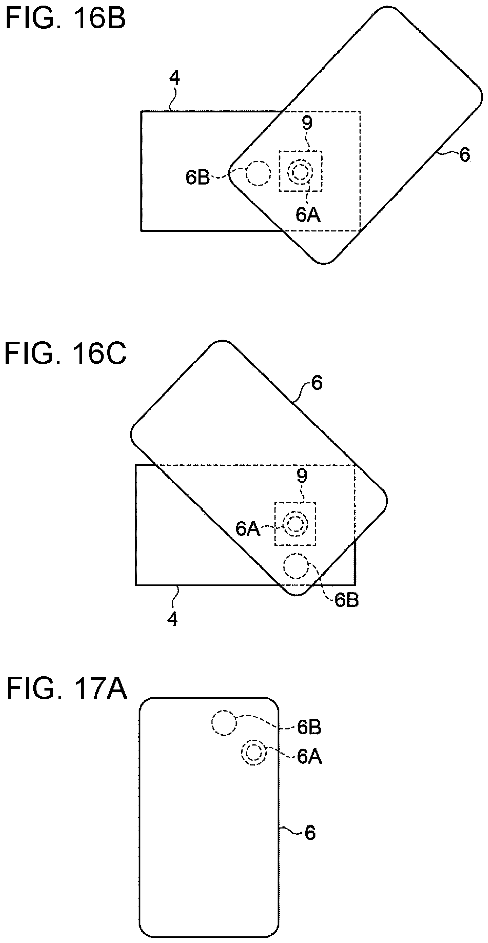

Fig. 16A is a diagram illustrating a seventh smartphone 6, in which the camera 6A and the light source 6B are in inclined arrangement, and Figs. 16B and 16C are diagrams illustrating examples of a radiation direction of light of the seventh smartphone 6.

In the smartphone 6 illustrated in Fig. 16A, the light source 6B is disposed above and to the right of the camera 6A disposed in an upper half of the smartphone 6.

Fig. 16B is a diagram illustrating an example of arrangement of the smartphone 6 illustrated in Fig. 16A in a case where the smartphone 6 captures an image of an inspection image 9 irradiated from the left.

Fig. 16C is a diagram illustrating an example of arrangement of the smartphone 6 illustrated in Fig. 16A in a case where the smartphone 6 captures an image of the inspection image 9 irradiated from the bottom.

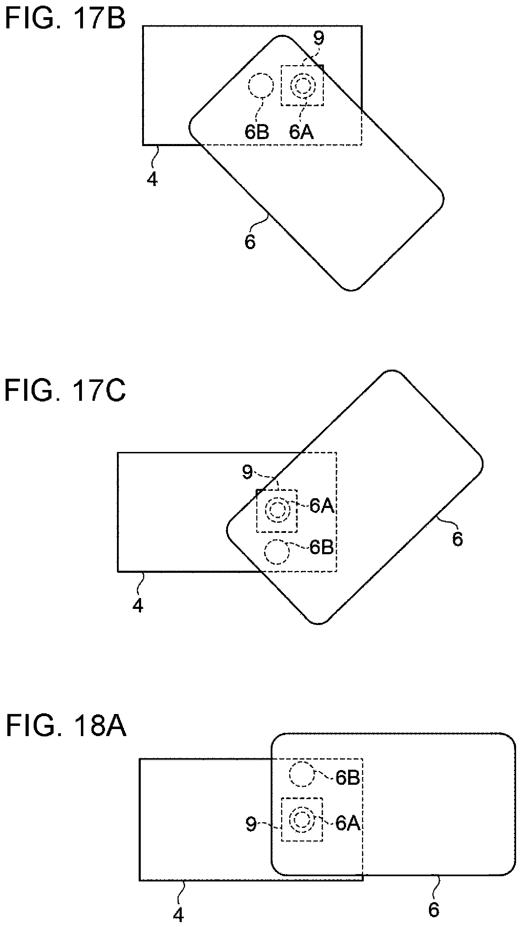

Fig. 17A is a diagram illustrating an eighth smartphone 6, in which the camera 6A and the light source 6B are in inclined arrangement, and Figs. 17B and 17C are diagrams illustrating examples of a radiation direction of light of the eighth smartphone 6.

In the smartphone 6 illustrated in Fig. 17A, the light source 6B is disposed above and to the left of the camera 6A disposed in an upper half of the smartphone 6.

Fig. 17B is a diagram illustrating an example of arrangement of the smartphone 6 illustrated in Fig. 17A in a case where the smartphone 6 captures an image of an inspection image 9 irradiated from the left.

Fig. 17C is a diagram illustrating an example of arrangement of the smartphone 6 illustrated in Fig. 17A in a case where the smartphone 6 captures an image of the inspection image 9 irradiated from the bottom.

By arranging the smartphone 6 with respect to the inspection image 9 as illustrated in Figs. 14B to 17C, even the smartphone 6 in which the camera 6A and the light source 6B are in inclined arrangement can obtain a captured image showing the inspection image 9 irradiated from the left and a captured image showing the inspection image 9 irradiated from the bottom.

The arrangement of the smartphone 6 that captures images of an inspection image 9 in accordance with the radiation direction of light has been described with reference to an example where a registered image obtained by capturing an image of a comparison image 1 irradiated from the left and a registered image obtained by capturing an image of the comparison image 1 irradiated from the bottom are prepared as a registered image group of the comparison image 1. Registered images included in a registered image group of a comparison image 1, however, are not limited to a registered image obtained by capturing an image of the comparison image 1 irradiated from the left and a registered image obtained by capturing an image of the comparison image 1 irradiated from the bottom. For example, registered images included in a registered image group of a comparison image 1 may be a registered image obtained by capturing an image of the comparison image 1 irradiated from the right and a registered image obtained by capturing an image of the comparison image 1 irradiated from the top, instead.

The user may then capture images of an inspection image 9 using the smartphone 6 in various radiation directions of light while changing the arrangement of the smartphone 6 such that radiation directions of light at a time when images of a comparison image 1 were captured using the dedicated apparatus 15 are achieved.

That is, when there are two registered images of different radiation directions of light as a registered image group of a comparison image 1, the comparison apparatus 10 can compare an inspection image 9 and the comparison image 1 on the basis of degrees of similarity between the comparison image 1 included in each of the two registered images and the inspection image 9 included in each of two captured images.

In some of the different ways of arrangement of the smartphone 6 illustrated in Figs. 10A, 11A, 12A, 13A, 14A, 15A, 16A, and 17A, however, it is difficult for the user to capture an image while holding the smartphone 6 in his/her hand or the user needs to pass the smartphone 6 from one hand to the other, due to a range of motion of joints of the user's body. When the user needs to hold the smartphone 6 upside down as in Figs. 11B, 13C, 15B, 16B, 16C, and 17C, for example, operability of the smartphone 6 in capturing the inspection image 9 is lower than in the other ways of arrangement.

In order to deal with such a situation, four registered images of different radiation directions of light may be captured and registered to the registered image DB 13 as a registered image group of a comparison image 1. As the radiation directions of light become more largely different from one another, changes in a pattern of the comparison image 1 become larger. Images of the comparison image 1, therefore, may be captured while shifting the radiation direction of light radiated onto the comparison image 1 by 90 degrees at a time along a periphery of the comparison image 1 so that a registered image obtained by capturing an image of the comparison image 1 irradiated from the top, a registered image obtained by capturing an image of the comparison image 1 irradiated from the right, a registered image obtained by capturing an image of the comparison image 1 irradiated from the bottom, and a registered image obtained by capturing an image of the comparison image 1 irradiated from the left are obtained.

"Captured while shifting the radiation direction of light along a periphery of the comparison image 1" means, for example, that the dedicated apparatus 15 captures images of the comparison image 1 while light is being radiated toward the comparison image 1 and the light source 15B of the dedicated apparatus 15 is being moved along contour lines of the comparison image 1 when the comparison image 1 is viewed from a front. Because halation tends to occur when illuminance on the comparison image 1 is too high, the images of the comparison image 1 may be captured with a positional relationship with which an optical axis of the light source 15B does not intersect with the comparison image 1.

In the case of the smartphone 6 illustrated in Fig. 11A, a registered image obtained by capturing an image of a comparison image 1 irradiated from the top and a registered image obtained by capturing an image of the comparison image 1 irradiated from the right may also be included in a registered image group so that the user need not capture an image of the inspection image 9 irradiated from the left as illustrated in Fig. 11B.

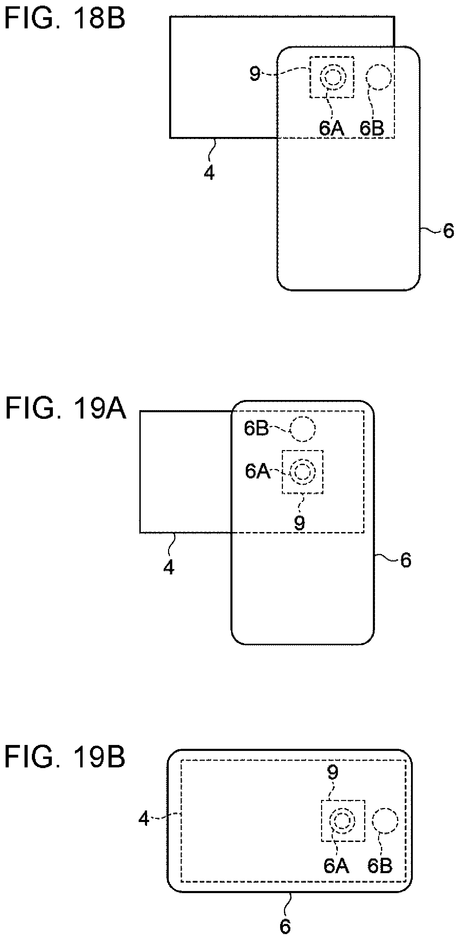

Figs. 18A and 18B are diagrams illustrating examples of arrangement of the smartphone 6 illustrated in Fig. 11A in a case where the smartphone 6 captures an image of the inspection image 9.

Fig. 18A is a diagram illustrating an example of arrangement of the smartphone 6 in a case where the smartphone 6 illustrated in Fig. 11A captures an image of the inspection image 9 irradiated from the top.

Fig. 18B is a diagram illustrating an example of arrangement of the smartphone 6 in a case where the smartphone 6 illustrated in Fig. 11A captures an image of the inspection image 9 irradiated from the right.

In the case of the smartphone 6 illustrated in Fig. 13A, a registered image obtained by capturing an image of a comparison image 1 irradiated from the top and a registered image obtained by capturing an image of the comparison image 1 irradiated from the right may also be included in a registered image group so that the user need not capture an image of the inspection image 9 irradiated from the bottom as illustrated in Fig. 13C.

Figs. 19A and 19B are diagrams illustrating examples of arrangement of the smartphone 6 illustrated in Fig. 13A in a case where the smartphone 6 captures an image of the inspection image 9.

Fig. 19A is a diagram illustrating an example of arrangement of the smartphone 6 in a case where the smartphone 6 illustrated in Fig. 13A captures an image of the inspection image 9 irradiated from the top.

Fig. 19B is a diagram illustrating an example of arrangement of the smartphone 6 in a case where the smartphone 6 illustrated in Fig. 13A captures an image of the inspection image 9 irradiated from the right.

In the case of the smartphone 6 illustrated in Fig. 15A, a registered image obtained by capturing an image of a comparison image 1 irradiated from the top and a registered image obtained by capturing an image of the comparison image 1 irradiated from the right may also be included in a registered image group so that the user need not capture an image of the inspection image 9 irradiated from the left illustrated in Fig. 15C.

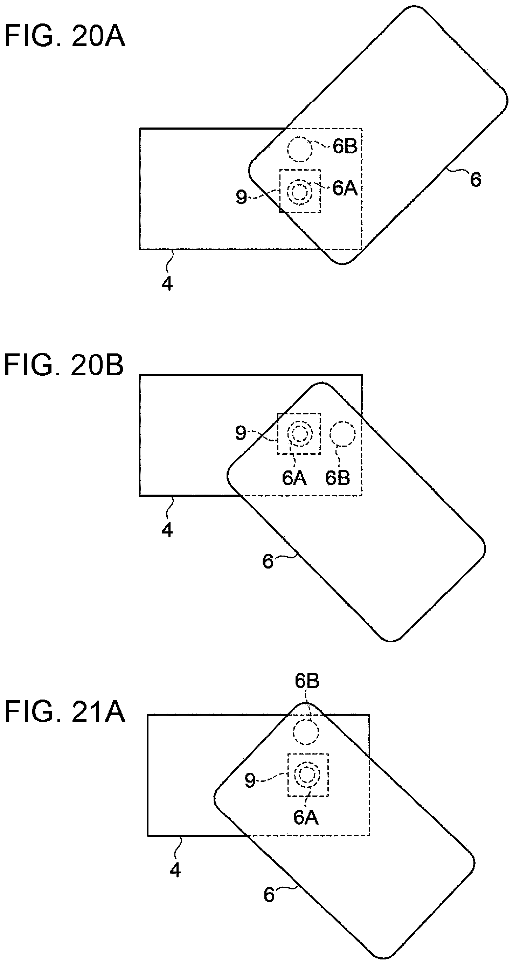

Figs. 20A and 20B are diagrams illustrating examples of arrangement of the smartphone 6 illustrated in Fig. 15A in a case where the smartphone 6 captures an image of the inspection image 9.

Fig. 20A is a diagram illustrating an example of arrangement of the smartphone 6 in a case where the smartphone 6 illustrated in Fig. 15A captures an image of the inspection image 9 irradiated from the top.

Fig. 20B is a diagram illustrating an example of arrangement of the smartphone 6 in a case where the smartphone 6 illustrated in Fig. 15A captures an image of the inspection image 9 irradiated from the right.

In the case of the smartphone 6 illustrated in Fig. 16A, a registered image obtained by capturing an image of a comparison image 1 irradiated from the top and a registered image obtained by capturing an image of the comparison image 1 irradiated from the right may also be included in a registered image group so that the user need not capture images of the inspection image 9 irradiated from the left and the bottom illustrated in Figs. 16B and 16C, respectively.

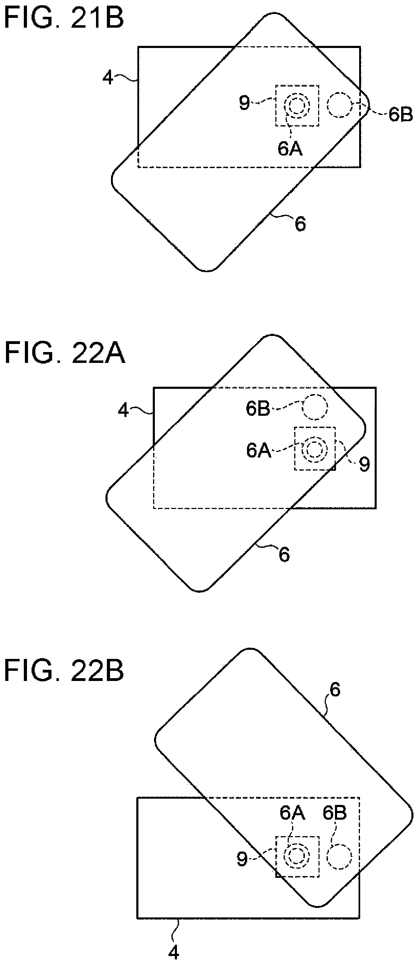

Figs. 21A and 21B are diagrams illustrating examples of arrangement of the smartphone 6 illustrated in Fig. 16A in a case where the smartphone 6 captures an image of the inspection image 9.

Fig. 21A is a diagram illustrating an example of arrangement of the smartphone 6 in a case where the smartphone 6 illustrated in Fig. 16A captures an image of the inspection image 9 irradiated from the top.

Fig. 21B is a diagram illustrating an example of arrangement of the smartphone 6 in a case where the smartphone 6 illustrated in Fig. 16A captures an image of the inspection image 9 irradiated from the right.

In the case of the smartphone 6 illustrated in Fig. 17A, a registered image obtained by capturing an image of a comparison image 1 irradiated from the top and a registered image obtained by capturing an image of the comparison image 1 irradiated from the right may also be included in a registered image group so that the user need not capture an image of the inspection image 9 irradiated from the bottom as illustrated in Fig. 17C.

Figs. 22A and 22B are diagrams illustrating examples of arrangement of the smartphone 6 illustrated in Fig. 17A in a case where the smartphone 6 captures an image of the inspection image 9.

Fig. 22A is a diagram illustrating an example of arrangement of the smartphone 6 in a case where the smartphone 6 illustrated in Fig. 17A captures an image of the inspection image 9 irradiated from the top.

Fig. 22B is a diagram illustrating an example of arrangement of the smartphone 6 in a case where the smartphone 6 illustrated in Fig. 17A captures an image of the inspection image 9 irradiated from the right.

In the case of the smartphone 6 illustrated in Fig. 11A, for example, it is easier for the user to capture images of the inspection image 9 with the ways of arrangement of the smartphone 6 illustrated in Figs. 11C, 18A, and 18B than with the way of arrangement of the smartphone 6 illustrated in Fig. 11B. When the smartphone 6 illustrated in Fig. 11A is used, therefore, the user is more likely to capture images of the inspection image 9 with any two of radiation directions of light including top radiation, right radiation, and bottom radiation.

In this case, a registered image obtained by capturing an image of a comparison image 1 irradiated from the top, a registered image obtained by capturing an image of the comparison image 1 irradiated from the right, a registered image obtained by capturing an image of the comparison image 1 irradiated from the bottom, and a registered image obtained by capturing an image of the comparison image 1 irradiated from the left may be registered to the registered image DB 13 as a registered image group of the comparison image 1. As a result, even when two captured images obtained with different radiation directions of light among from the top, from the bottom, from the left, and from the right are transmitted to the comparison apparatus 10, the comparison apparatus 10 can compare the inspection image 9 with the comparison image 1 after determining whether the inspection image 9 is a duplicate image 2 of the comparison image 1.

That is, a registered image group including four registered images that are at least different from one another in terms of the radiation direction of light, namely top radiation, right radiation, bottom radiation, and left radiation, for example, may be registered to the registered image DB 13 of the image forming apparatus 10 for each comparison image 1. As a result, an inspection image 9 included in captured images obtained by the smartphone 6 can be compared with a comparison image 1 regardless of how the camera 6A and the light source 6B are arranged in the smartphone 6.

When a smartphone 6 in which the camera 6A and the light source 6B are in perpendicular arrangement is to capture images of an inspection image 9 under top radiation, right radiation, bottom radiation, and left radiation, the user may capture the images of the inspection image 9 while holding the smartphone 6 horizontally or vertically as illustrated in Figs. 10A to 13C and 18A to 19B. When a smartphone 6 in which the camera 6A and the light source 6B are in inclined arrangement is to capture images of an inspection image 9 under top radiation, right radiation, bottom radiation, and left radiation, however, a situation arises where the user needs to capture the images of the inspection image 9 while holding the smartphone 6 diagonally with respect to the inspection image 9 as illustrated in Figs. 14A to 17C and 20A to 22B.

It is usually easier for the user to hold and operate the smartphone 6 when the user holds the smartphone 6 horizontally or vertically than when the user holds the smartphone 6 diagonally.

It is therefore assumed that the user will capture an image of an inspection image 9 while horizontally or vertically holding a smartphone 6 in which the camera 6A and the light source 6B are in inclined arrangement. Registered images captured with the same radiation directions of light as those of the light source 6B in a case where the smartphone 6 is held horizontally or vertically, therefore, may also be registered, as a registered image group, to the registered image DB 13 for each comparison image 1.

Holding the smartphone 6 horizontally refers to holding the smartphone 6 such that long sides of contour lines of the smartphone 6 extend in a left-and-right direction in the user's view. Holding the smartphone 6 vertically refers to holding the smartphone 6 such that long sides of contour lines of the smartphone 6 extend in an up-and-down direction in the user's view. Holding the smartphone 6 diagonally refers to holding the smartphone 6 such that angles between long sides of contour lines of the smartphone 6 and a horizontal line virtually set along the left-and-right direction in the user view become other than 90 degrees.

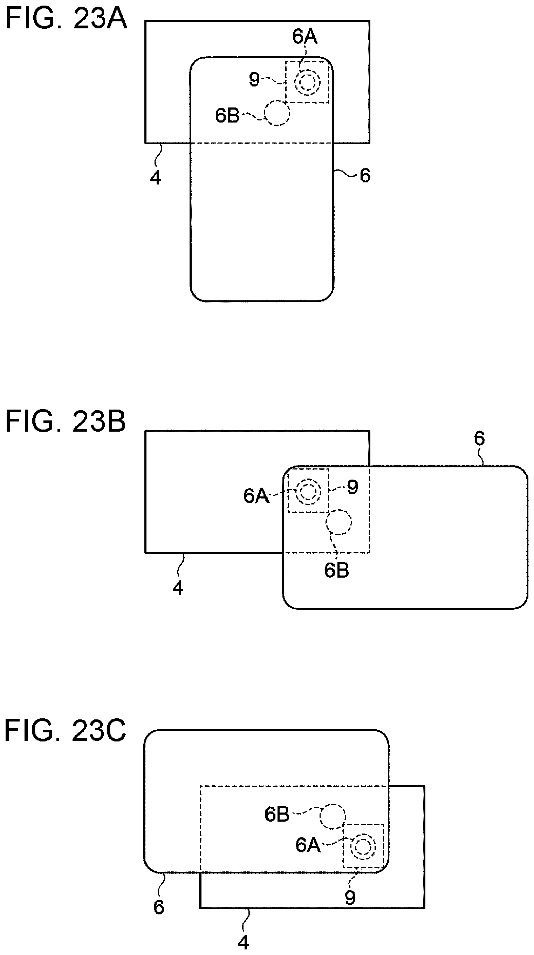

Figs. 23A, 23B, and 23C are diagrams illustrating examples of arrangement where the smartphone 6 of inclined arrangement illustrated in Fig. 14A is arranged horizontally or vertically.

Fig. 23A is a diagram illustrating an example of arrangement where the smartphone 6 is arranged vertically such that the camera 6A comes to the top. In this case, the light source 6B of the smartphone 6 radiates light onto an inspection image 9 from a direction (referred to as a "diagonally bottom-left direction") 45 degrees counterclockwise away from the radiation direction of light in the left radiation along a periphery of the inspection image 9 (referred to as "diagonally bottom-left radiation").

Fig. 23B is a diagram illustrating an example of arrangement where the smartphone 6 is arranged horizontally such that the camera 6A comes to the left. In this case, the light source 6B of the smartphone 6 radiates light onto the inspection image 9 from a direction (referred to as a "diagonally bottom-right direction") 45 degrees counterclockwise away from the radiation direction of light in the bottom radiation along the periphery of the inspection image 9 (referred to as "diagonally bottom-right radiation").

Fig. 23C is a diagram illustrating an example of arrangement where the smartphone 6 is arranged horizontally such that the camera 6A comes to the right. In this case, the light source 6B of the smartphone 6 radiates light onto the inspection image 9 from a direction (referred to as a "diagonally top-left direction") 45 degrees counterclockwise away from the radiation direction of light in the top direction along the periphery of the inspection image 9 (referred to as "diagonally top-left radiation").

When the smartphone 6 illustrated in Fig. 14A is arranged vertically such that the camera 6A comes to the bottom, the light source 6B of the smartphone 6 radiates light onto the inspection image 9 from a direction (referred to as a "diagonally top-right direction") 45 degrees counterclockwise away from the radiation direction of light in the right direction along the periphery of the inspection image 9 (referred to as "diagonally top-right radiation"). In this case, however, the user needs to hold the smartphone 6 upside down, and the operability of the smartphone 6 is lower than in the ways of arrangement illustrated in Fig. 14A. In the case of the smartphone 6 of inclined arrangement illustrated in Fig. 14A, therefore, registered images obtained by capturing images of a comparison image 1 irradiated from diagonally bottom-left, diagonally bottom-right, and diagonally top-left, for example, may be registered in the registered image DB 13 of the comparison apparatus 10 as a registered image group, in addition to four registered images obtained by capturing images of the comparison image 1 irradiated from the top, the right, the bottom, and the left.

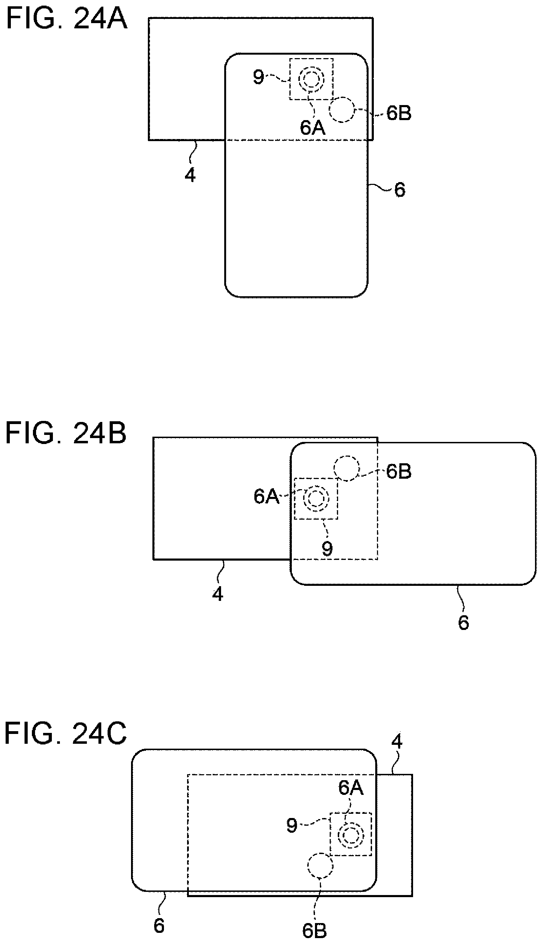

Figs. 24A, 24B, and 24C are diagrams illustrating examples of arrangement where the smartphone 6 of inclined arrangement illustrated in Fig. 15A is arranged horizontally or vertically.

Fig. 24A is a diagram illustrating an example of arrangement where the smartphone 6 is arranged vertically such that the camera 6A comes to the top. In this case, the light source 6B of the smartphone 6 radiates light onto an inspection image 9 from the diagonally bottom-right direction.

Fig. 24B is a diagram illustrating an example of arrangement where the smartphone 6 is arranged horizontally such that the camera 6A comes to the left. In this case, the light source 6B of the smartphone 6 radiates light onto the inspection image 9 from the diagonally top-right direction.

Fig. 24C is a diagram illustrating an example of arrangement where the smartphone 6 is arranged horizontally such that the camera 6A comes to the right. In this case, the light source 6B of the smartphone 6 radiates light onto the inspection image 9 from the diagonally bottom-left direction.

When the smartphone 6 illustrated in Fig. 15A is arranged vertically such that the camera 6A comes to the bottom, the light source 6B of the smartphone 6 radiates light onto the inspection image 9 from the diagonally top-left direction. In this case, however, the user needs to hold the smartphone 6 upside down, and the operability of the smartphone 6 is lower than in the ways of arrangement illustrated in Fig. 15A. In the case of the smartphone 6 of inclined arrangement illustrated in Fig. 15A, therefore, registered images obtained by capturing images of a comparison image 1 irradiated from diagonally bottom-right, diagonally top-right, and diagonally bottom-left, for example, may be registered in the registered image DB 13 of the comparison apparatus 10 as a registered image group, in addition to four registered images obtained by capturing images of the comparison image 1 irradiated from the top, the right, the bottom, and the left.

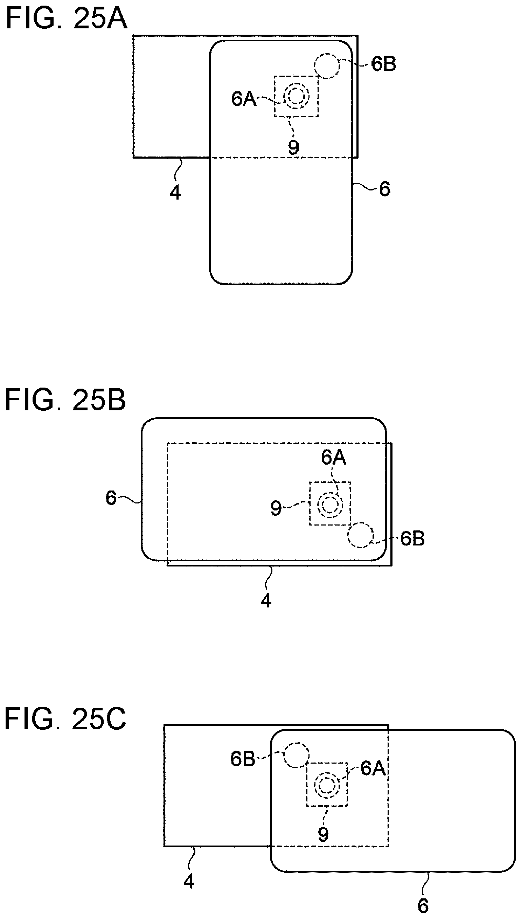

Figs. 25A, 25B, and 25C are diagrams illustrating examples of arrangement where the smartphone 6 of inclined arrangement illustrated in Fig. 16A is arranged horizontally or vertically.

Fig. 25A is a diagram illustrating an example of arrangement where the smartphone 6 is arranged vertically such that the camera 6A comes to the top. In this case, the light source 6B of the smartphone 6 radiates light onto an inspection image 9 from the diagonally top-right direction.

Fig. 25B is a diagram illustrating an example of arrangement where the smartphone 6 is arranged horizontally such that the camera 6A comes to the right. In this case, the light source 6B of the smartphone 6 radiates light onto the inspection image 9 from the diagonally bottom-right direction.

Fig. 25C is a diagram illustrating an example of arrangement where the smartphone 6 is arranged horizontally such that the camera 6A comes to the left. In this case, the light source 6B of the smartphone 6 radiates light onto the inspection image 9 from the diagonally top-left direction.

When the smartphone 6 illustrated in Fig. 16A is arranged vertically such that the camera 6A comes to the bottom, the light source 6B of the smartphone 6 radiates light onto the inspection image 9 from the diagonally bottom-left direction. In this case, however, the user needs to hold the smartphone 6 upside down, and the operability of the smartphone 6 is lower than in the ways of arrangement illustrated in Fig. 16A. In the case of the smartphone 6 of inclined arrangement illustrated in Fig. 16A, therefore, registered images obtained by capturing images of a comparison image 1 irradiated from diagonally top-right, diagonally bottom-right, and diagonally top-left, for example, may be registered in the registered image DB 13 of the comparison apparatus 10 as a registered image group, in addition to four registered images obtained by capturing images of the comparison image 1 irradiated from the top, the right, the bottom, and the left.

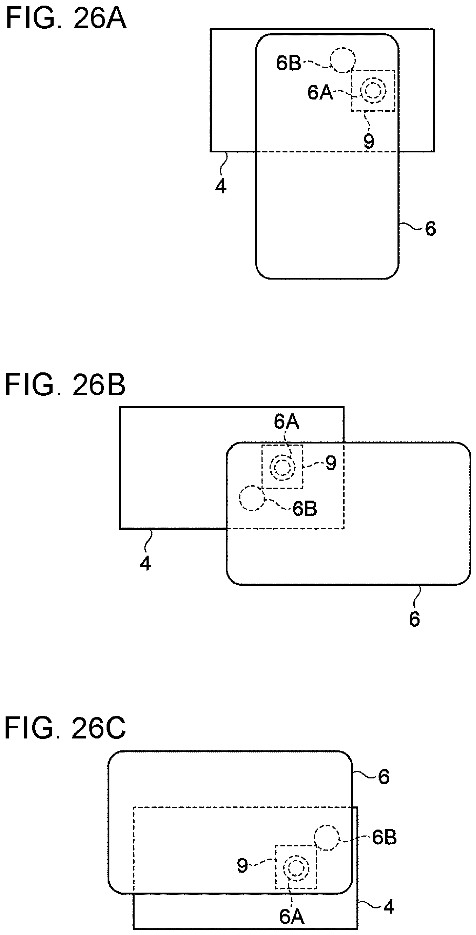

Figs. 26A, 26B, and 26C are diagrams illustrating examples of arrangement where the smartphone 6 of inclined arrangement illustrated in Fig. 17A is arranged horizontally or vertically.

Fig. 26A is a diagram illustrating an example of arrangement where the smartphone 6 is arranged vertically such that the camera 6A comes to the top. In this case, the light source 6B of the smartphone 6 radiates light onto an inspection image 9 from the diagonally top-left direction.

Fig. 26B is a diagram illustrating an example of arrangement where the smartphone 6 is arranged horizontally such that the camera 6A comes to the left. In this case, the light source 6B of the smartphone 6 radiates light onto the inspection image 9 from the diagonally bottom-left direction.

Fig. 26C is a diagram illustrating an example of arrangement where the smartphone 6 is arranged horizontally such that the camera 6A comes to the right. In this case, the light source 6B of the smartphone 6 radiates light onto the inspection image 9 from the diagonally top-right direction.

When the smartphone 6 illustrated in Fig. 17A is arranged vertically such that the camera 6A comes to the bottom, the light source 6B of the smartphone 6 radiates light onto the inspection image 9 from the diagonally bottom-right direction. In this case, however, the user needs to hold the smartphone 6 upside down, and the operability of the smartphone 6 is lower than in the ways of arrangement illustrated in Fig. 17A. In the case of the smartphone 6 of inclined arrangement illustrated in Fig. 17A, therefore, registered images obtained by capturing images of a comparison image 1 irradiated from diagonally top-left, diagonally bottom-left, and diagonally top-right, for example, may be registered in the registered image DB 13 of the comparison apparatus 10 as a registered image group, in addition to four registered images obtained by capturing images of the comparison image 1 irradiated from the top, the right, the bottom, and the left.

As a matter of course, there are users who capture an image of an inspection image 9 while holding one of the smartphones 6 illustrated in Figs. 14A, 15A, 16A, and 17A upside down. In consideration of this, a total of eight registered images, namely four registered images obtained by capturing images of a comparison image 1 irradiated from the top, the right, the bottom, and the left and four registered images obtained by capturing images of the comparison image 1 irradiated from diagonally top-left, diagonally bottom-left, diagonally top-right, and diagonally bottom-right, may be registered in the registered image DB 13 of the comparison apparatus 10 as a registered image group for each comparison image 1.

Here, as an example, images captured while radiating light onto a comparison image 1 from directions 45 degrees counterclockwise away from the radiation directions of light at a time when images of the comparison image 1 irradiated from the top, the right, the bottom, and the left are captured along a periphery of the comparison image 1 are used as registered images. A registered image, however, may be captured while radiating light onto a comparison image 1 from a direction achieved by shifting a radiation direction of light by an angle smaller than 90 degrees, such as 30 degrees or 70 degrees, counterclockwise along a periphery of the comparison image 1. In addition, there is no limit to the number of registered images registered as a registered image group for each comparison image 1.

Registered images captured while radiating light onto a comparison image 1 from directions achieved by shifting the radiation directions of light in the top radiation, the right radiation, the bottom radiation, and the left radiation by angles smaller than 90 degrees counterclockwise along a periphery of the comparison image 1 are an example of additional images. Four registered images obtained by capturing images of the comparison image 1 under diagonally top-left radiation, diagonally bottom-left radiation, diagonally top-right radiation, and diagonally bottom-right radiation are also an example of the additional images.

Registered images obtained by capturing images of a comparison image 1 irradiated from the top, the right, the bottom, and the left need not necessarily be included in a registered image group. Registered images obtained by capturing images of a comparison image 1 irradiated from diagonally top-left, diagonally bottom-left, diagonally top-right, and diagonally bottom-right alone may constitute a registered image group, instead.

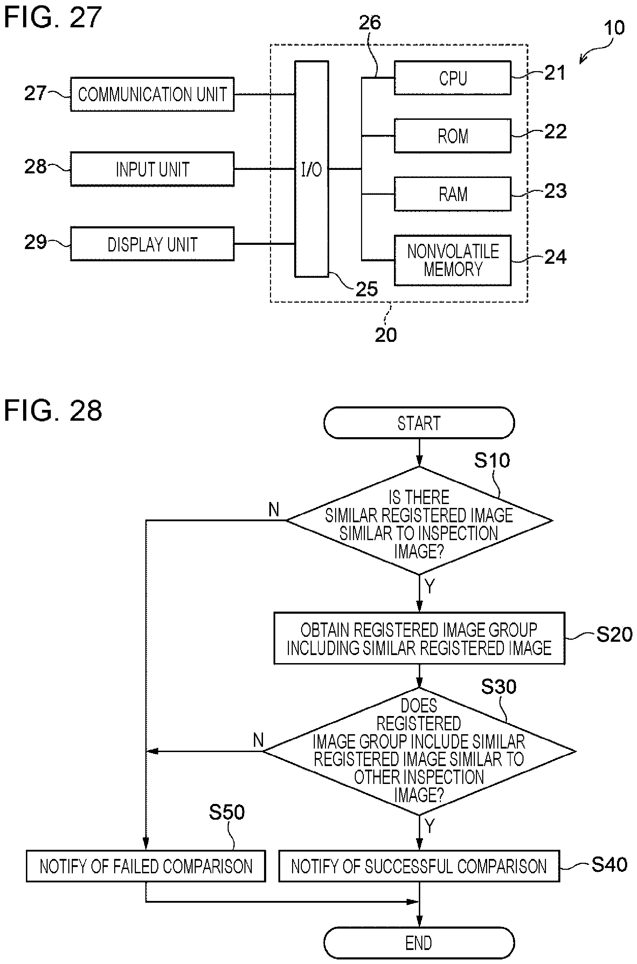

The comparison apparatus 10 may be achieved using a computer 20. Fig. 27 is a diagram illustrating an example of key components of an electrical system of the computer 20.

The computer 20 includes a CPU (central processing unit) 21, which is an example of a processor that serves as the functional units of the comparison apparatus 10 illustrated in Fig. 7, a ROM (read-only memory) 22 storing a comparison program causing the computer 20 to function as the comparison apparatus 10, a RAM (random-access memory) 23 used as a temporary work area of the CPU 21, a non-volatile memory 24, and an input/output interface (I/O) 25. The CPU 21, the ROM 22, the RAM 23, the non-volatile memory 24, and the I/O 25 are connected to one another via a bus 26.

The non-volatile memory 24 is an example of a storage device that retains stored information even when power supplied to the non-volatile memory 24 is cut off. The registered image DB 13 is constructed, for example, in the non-volatile memory 24.

A semiconductor memory is used as the non-volatile memory 24, but a hard disk may be used, instead. The non-volatile memory 24 need not necessarily be built in the computer 20, and may be, for example, a portable storage device removably attached to the computer 20.

A communication unit 27, an input unit 28, and a display unit 29, for example, are connected to the I/O 25.

The communication unit 27 is connected to the communication network 8 and has a communication protocol for communicating data with the smartphone 6.

The input unit 28 is a device that receives an instruction from an operator of the comparison apparatus 10 and that notifies the CPU 21 of the instruction and is, for example, a button, a touch panel, a keyboard, a mouse, or the like.

The display unit 29 is an example of a device that visually displays information processed by the CPU 21 and is, for example, a liquid crystal display, an organic EL (electroluminescence) display, or the like.

Next, a process for comparing an inspection image 9 and a comparison image 1 performed by the comparison apparatus 10 will be described.

Fig. 28 is a flowchart illustrating an example of the comparison process performed by the CPU 21 of the comparison apparatus 10 when a plurality of captured images obtained by capturing images of the same inspection image 9 while changing a radiation direction of light are received from the user's smartphone 6.

The comparison program that defines the comparison process is stored in the ROM 22 of the comparison apparatus 10, for example, in advance. The CPU 21 of the comparison apparatus 10 reads the comparison program stored in the ROM 22 and executes the comparison process.

Here, as an example, an example where two captured images are received from the smartphone 6 will be described.

First, in step S10, the CPU 21 selects one of the captured images, calculates degrees of similarity between an inspection image 9 included in the selected captured image and comparison images 1 included in registered images registered in the registered image DB 13 using a known comparison algorithm, and determines whether there is a registered image including a comparison image 1 similar to the inspection image 9.

An inspection image 9 and a comparison image 1 are determined to be similar to each other, for example, if the number of comparison areas where features match is larger than or equal to a reference value among a plurality of comparison areas set in advance for each of the two image in order to compare the features of the two images.

A registered image including a comparison image 1 similar to an inspection image 9 will be referred to as a "similar registered image" hereafter for convenience of description.

Absence of a similar registered image means that the inspection image 9 is not similar to any of the comparison images 1 included in the registered images registered in the registered image DB 13. That is, the inspection image 9 is not a comparison image 1. In this case, the process proceeds to step S50.

In step S50, the CPU 21 sets a comparison result as "failed comparison", transmits the comparison result to the smartphone 6 via the communication unit 27, and ends the comparison process illustrated in Fig. 28.

If it is determined in the determination in step S10 that there is a similar registered image similar to the inspection image 9, on the other hand, the process proceeds to step S20.

In this case, the inspection image 9 can be a comparison image 1 included in the similar registered image, but it is also possible that the inspection image 9 is a duplicate image 2 of the comparison image 1 included in the similar registered image. If the inspection image 9 included in the captured image selected in step S10 (referred to as an "inspection image 9") is a genuine comparison image 1, there must be a similar registered image similar to an inspection image 9 included in the other captured image (referred to as "another inspection image 9") in a registered image group including the similar registered image similar to the inspection image 9.

In step S20, therefore, the CPU 21 obtains, from the registered image DB 13, the registered image group including the similar registered image similar to the inspection image 9.

In step S30, the CPU 21 determines whether the registered image group obtained in step S20 includes a registered image that is different from the similar registered image similar to the inspection image 9 and that is similar to the other inspection image 9. If there is a similar registered image similar to the other inspection image 9, the process proceeds to step S40.

In this case, since the plurality of inspection images 9 captured while changing the radiation direction of light are similar to patterns of the same comparison image 1 of different radiation directions of light, the inspection images 9 included in the plurality of captured images are images obtained by capturing images of a genuine comparison image 1.

In step S40, therefore, the CPU 21 sets the comparison result as "successful comparison", transmits the comparison result to the smartphone 6 via the communication unit 27, and ends the comparison process.

If it is determined in the determination in step S30 that there is no similar registered image similar to the other inspection image 9, on the other hand, the process proceeds to step S50.

In this case, since the inspection images 9 do not have the same patterns as those of the comparison image 1 caused by different radiation directions of light, the inspection image 9 whose images have been captured by the smartphone 6 is considered to be a duplicate image 2 of the comparison image 1. The CPU 21, therefore, sets the comparison result as "failed comparison", transmits the comparison result to the smartphone 6 via the communication unit 27, and ends the comparison process illustrated in Fig. 28.

Although an example has been described here where the comparison apparatus 10 obtains, from the smartphone 6, two captured images obtained by capturing images of the same inspection image 9 while changing the radiation direction of light, the number of captured images used by the comparison apparatus 10 for comparison with a comparison image 1 is not limited to two, and may be three or more, instead. In this case, a registered image group might not include a registered image captured in the same radiation direction of light as that of light radiated when the user captures an image of an inspection image 9 using the smartphone 6. When there is a specific registered image group including similar registered images similar to inspection images 9 included in at least two captured images, respectively, therefore, the comparison apparatus 10 may determine that the inspection image 9 whose images have been captured by the smartphone 6 is a genuine comparison image 1 corresponding to the specific registered image group.

There can be a condition where, for each comparison image 1, there is a registered image group obtained by capturing images of the comparison image 1 while radiating light from all directions along a periphery of the comparison image 1. Under this condition, if a specific registered image group includes similar registered images similar to inspection images 9 included in all captured images, respectively, the comparison apparatus 10 may determine that an inspection image 9 whose images have been captured by the smartphone 6 is a genuine comparison image 1 corresponding to the specific registered image group.

Although a configuration where the comparison image 1 is composed of black powder has been described above, the comparison image 1 may be composed of, as described above, silver powder or a combination of black powder and silver powder, instead. Black and silver powders tend to have a higher contrast between a color of the powder and reflected light than powders of other colors. Because differences between patterns observed on the comparison image 1 due to the radiation direction of light can be recognized more distinctly as contrast between a color of powder and reflected light increases, the comparison image 1 may be composed of at least black powder or silver powder, instead.

Black refers to a color having RGB values of (0, 0, 0) (referred to as a "reference color" of black) and colors whose deviation from the reference color of black is within a permissible range for any of the values of R, G, and B. Here, the permissible range refers to a maximum amount of deviation from the reference color within which a color can still be regarded as being the same as the reference color even if the RGB values deviate from those of the reference color. Silver, therefore, refers to a color having RGB values of (192, 192, 192), which indicates a reference color of silver, and colors whose deviation from the reference color of silver is within a permissible range for any of the values of R, G, and B.

Although it has been described above that the comparison image 1 may be composed of silver powder, the comparison image 1 may be formed by attaching a material obtained by mixing silver powder to a surface of an object, instead. Depending on a mixing ratio of the silver powder, a color of the comparison image 1 might not necessarily become a silver defined by the RGB values, but differences between patterns observed on the comparison image 1 depending on the radiation direction of light can be recognized.

In the above description, an example where the comparison apparatus 10 compares an inspection image 9 whose images have been captured by the smartphone 6 and a comparison image 1 has been described. The comparison program executed by the comparison apparatus 10 in the above description, however, may be executed by the smartphone 6, instead, and the smartphone 6 may compare an inspection image 9 and a comparison image 1.

Although one aspect of the comparison apparatus 10 has been described above with reference to an exemplary embodiment, the mode of the disclosed comparison apparatus 10 is an example, and the mode of the comparison apparatus 10 is not limited to the range described in the exemplary embodiment. The exemplary embodiment may be modified or improved in various ways without deviating from the scope of the present disclosure, and the technical scope of the present disclosure also includes modes obtained through such modifications or improvements. For example, order of the comparison process illustrated in Fig. 28 may be changed without deviating from the spirit of the present disclosure.

In addition, in the above exemplary embodiment, a mode in which the comparison process is achieved by software has been described as an example. The same process as that illustrated by the flowchart of Fig. 28 may be achieved by hardware, instead. In this case, processing speed becomes higher than when the comparison process is achieved by software.

In the above exemplary embodiment, the processor refers to a processor in a broad sense and includes a general processor (e.g., the CPU 21) or a dedicated processor (e.g., a GPU: Graphics Processing Unit, an ASIC: Application Specific Integrated Circuit, an FPGA: Field Programmable Gate Array, a programmable logic device, etc.).

In addition, the operation of the processor in the above exemplary embodiment may be achieved not only by one processor but also by plural processors located physically apart from each other through a cooperative operation. Order of operations of the processor is not limited to one described in the above exemplary embodiment, and may be changed as necessary.

Although an example where the comparison program is stored in the ROM 22 has been described in the above exemplary embodiment, the comparison program need not be stored in the ROM 22. The comparison program in the present disclosure may also be stored in a storage medium readable by the computer 20 and provided, instead. For example, the comparison program may be stored in an optical disc such as a CD-ROM (compact disk read-only memory) or a DVD-ROM (digital versatile disk read-only memory). Alternatively, the comparison program may be stored in a portable semiconductor memory such as a USB (universal serial bus) memory or a memory card. The ROM 22, the non-volatile memory 24, the CD-ROM, the DVD-ROM, the USB memory, and the memory card are examples of a non-transitory storage medium.

Furthermore, the comparison apparatus 10 may download the comparison program from an external apparatus, which is not illustrated, connected to the communication network 8 through the communication unit 27 and store the downloaded comparison program in the storage device, instead. In this case, the CPU 21 of the comparison apparatus 10 reads, from the storage device, the comparison program downloaded from the external device, which is not illustrated, and performs the comparison process.

The present application is based on the Japanese patent application (Japanese Patent Application No. 2020-212626) filed on December 22, 2020.

## Claims

1. A comparison apparatus comprising:
a processor,
wherein the processor obtains a plurality of captured images obtained by capturing images of an inspection image to be compared while changing a radiation direction of light radiated onto the inspection image and notifies of a result of comparison between the inspection image and a comparison image in accordance with degrees of a plurality of registered images obtained by capturing in advance images of the comparison image, whose pattern changes depending on a radiation direction of light, while changing the radiation direction of light radiated onto the comparison image and inspection images included in the plurality of captured images after adjusting positional relationships between a camera, a light source, and the comparison image such that the positional relationships become the same as positional relationships between a camera that captures the images of the inspection image in a case where the images of the inspection image are captured, a light source that radiates light onto the inspection image, and the inspection image.

2. The comparison apparatus according to claim 1,
wherein the processor notifies of the result of comparison on a basis of the registered images including four images captured while shifting the radiation direction of light radiated onto the comparison image by 90 degrees at a time along a periphery of the comparison image.

3. The comparison apparatus according to claim 2,
wherein the processor notifies of the result of comparison on a basis of the registered images including, in addition to the four images, four additional images captured while shifting, from radiation directions of light radiated onto the comparison image in a case where the four images have been captured, the radiation direction of light by an angle smaller than 90 degrees at a time along the periphery of the comparison image.

4. The comparison apparatus according to claim 3,
wherein the processor notifies of the result of comparison while determining, as the four additional images, images captured while shifting, from the radiation directions of light radiated onto the comparison image in a case where the four images have been captured, the radiation direction of light by 45 degrees at a time along the periphery of the comparison image.

5. The comparison apparatus according to any one of claims 1 to 4,
wherein the processor notifies of the result of comparison on a basis of the registered images captured under light radiated from one point light source.

6. The comparison apparatus according to claim 5,
wherein the processor notifies of the result of comparison on a basis of the registered images for which an angle between an optical axis of the point light source and an optical axis of a camera of a first imaging apparatus that captures the registered images is adjusted in accordance with an angle between an optical axis of a camera of a second imaging apparatus that captures the images of the inspection image and an optical axis of a built-in point light source of the second imaging apparatus.

7. The comparison apparatus according to any one of claims 1 to 6,
wherein the comparison image is a three-dimensional image formed on a recording medium in three dimensions.

8. The comparison apparatus according to claim 7,
wherein the three-dimensional image is an image formed by making powder adhere to the recording medium.

9. The comparison apparatus according to claim 8,
wherein the image composed of the powder is an image composed of black or silver powder on a surface of the recording medium.

10. The comparison apparatus according to any one of claims 1 to 6,
wherein the comparison image is an image on a surface of an object formed by attaching a material containing silver powder to the object.

11. A comparison program causing a computer to perform a process comprising:
obtaining a plurality of captured images obtained by capturing images of an inspection image to be compared while changing a radiation direction of light radiated onto the inspection image and notifying of a result of comparison between the inspection image and a comparison image in accordance with degrees of a plurality of registered images obtained by capturing in advance images of the comparison image, whose pattern changes depending on a radiation direction of light, while changing the radiation direction of light radiated onto the comparison image and inspection images included in the plurality of captured images after adjusting positional relationships between a camera, a light source, and the comparison image such that the positional relationships become the same as positional relationships between a camera that captures the images of the inspection image in a case where the images of the inspection image are captured, a light source that radiates light onto the inspection image, and the inspection image.

12. A storage medium storing a comparison program causing a computer to perform a process comprising:
obtaining a plurality of captured images obtained by capturing images of an inspection image to be compared while changing a radiation direction of light radiated onto the inspection image and notifying of a result of comparison between the inspection image and a comparison image in accordance with degrees of a plurality of registered images obtained by capturing in advance images of the comparison image, whose pattern changes depending on a radiation direction of light, while changing the radiation direction of light radiated onto the comparison image and inspection images included in the plurality of captured images after adjusting positional relationships between a camera, a light source, and the comparison image such that the positional relationships become the same as positional relationships between a camera that captures the images of the inspection image in a case where the images of the inspection image are captured, a light source that radiates light onto the inspection image, and the inspection image.

13. A comparison method comprising:
obtaining a plurality of captured images obtained by capturing images of an inspection image to be compared while changing a radiation direction of light radiated onto the inspection image and notifying of a result of comparison between the inspection image and a comparison image in accordance with degrees of a plurality of registered images obtained by capturing in advance images of the comparison image, whose pattern changes depending on a radiation direction of light, while changing the radiation direction of light radiated onto the comparison image and inspection images included in the plurality of captured images after adjusting positional relationships between a camera, a light source, and the comparison image such that the positional relationships become the same as positional relationships between a camera that captures the images of the inspection image in a case where the images of the inspection image are captured, a light source that radiates light onto the inspection image, and the inspection image.
